# EUROPEAN PATENT SPECIFICATION

(11) **EP 4 497 528 B1**
(45) Date of publication and mention of the grant of the patent: **15.07.2026**
(21) Application number: 22933243.2
(22) Date of filing: 22.03.2022
(51) Int. Cl.: B23K 26/38, B23K 26/08, B23K 37/0533, B23K 37/0538, B23K 101/06

(54) **LASER MACHINING TOOL AND LASER MACHINING METHOD**
LASERBEARBEITUNGSMASCHINE UND LASERBEARBEITUNGSVERFAHREN
APPAREIL D'USINAGE LASER ET PROCÉDÉ D'USINAGE LASER

(43) Date of publication of application: 29.01.2025
(73) Proprietor: Yamazaki Mazak Corporation, Niwa-gun, Aichi 480-0197 (JP)
(72) Inventor: KAGEYAMA, Keisuke, Niwa-gun, Aichi 480-0197 (JP); SHIMAMOTO, Kazuya, Niwa-gun, Aichi 480-0197 (JP); NAKANISHI, Tetsuya, Niwa-gun, Aichi 480-0197 (JP); HACHIYA, Keita, Niwa-gun, Aichi 480-0197 (JP)
(74) Representative: TBK
(86) International application number: PCT/JP2022/012964
(87) International publication number: WO 2023/181093

(56) References cited:
- CN-A- 106 271 104
- CN-U- 207 521 898
- JP-A- 2001 087 885
- JP-A- 2016 032 857
- JP-A- 2017 170 529
- JP-B2- 6 832 069
- US-A1- 2022 023 974
- HÉLÈNE: "HSG Laser R3 tube laser cutting machine", 17 September 2021 (2021-09-17), XP093270147, Retrieved from the Internet <URL:https://www.youtube.com/watch?v=Uuf2CQPewcU> [retrieved on 20250414]

## Description

The present invention relates to a laser-beam working machine according to the preamble of claim 1 and a laser-beam machining method.

A laser-beam working machine using a laser beam for machining a long workpiece is known.

As a related technique, JP H05-253741 A discloses a vise docking mechanism (chuck docking mechanism) of a cutting machine. The vise docking mechanism described in JP H05-253741 A includes a body vise provided in close proximity to a cutting position of a material, a feed vise for feeding the material by a constant size, and a front vise for holding and pulling out a front end of the material. In the vise docking mechanism described in JP H05-253741 A, the docking vise can be formed by docking the feed vise with the body vise, the docking vise can be advanced in a direction toward the front vise, and the docking vise can be retracted in a direction away from the front vise.

A known laser-beam working machine according to the preamble of claim 1 can be found at https://www.youtube.com/watch?v=Uuf2CQPewcU. This laser-beam working machine comprises a laser head configured to irradiate a workpiece extending in a first direction with a laser beam to machine the workpiece; a first chuck including a grip member configured to hold the workpiece, the first chuck being movable in the first direction; a second chuck provided between the laser head and the first chuck in a direction along the first direction, the second chuck including a plurality of guide rollers configured to interpose the workpiece and guide a movement of the workpiece in the first direction; and a mover configured to move the first chuck in the first direction.

### Summary of Invention

It is the object of the present invention to further develop a laser-beam working machine according to the preamble of claim 1 and to provide a laser-beam machining method such that they are capable of shortening the length of a remaining workpiece produced by machining of a workpiece extending in a first direction.

The object of the present invention is achieved by a laser-beam working machine having the features of claim 1 and a laser-beam machining method having the features of claim 12.

Further advantageous developments according to the present invention are defined in the dependent claims.

According to an advantage of the present invention, a laser-beam working machine and a laser-beam machining method are provided that can shorten the length of a remaining workpiece produced by machining of a workpiece that extends in a first direction.

### Brief Description of Drawings

[FIG. 1] FIG. 1 is a side view of a laser-beam working machine according to a first embodiment, schematically illustrating the laser-beam working machine.
[FIG. 2] FIG. 2 is a side view of the laser-beam working machine according to the first embodiment, schematically illustrating the laser-beam working machine.
[FIG. 3] FIG. 3 is a side view of the laser-beam working machine according to the first embodiment, schematically illustrating the laser-beam working machine.
[FIG. 4] FIG. 4 is a side view of the laser-beam working machine according to the first embodiment, schematically illustrating the laser-beam working machine.
[FIG. 5] FIG. 5 is a side view of the laser-beam working machine according to the first embodiment, schematically illustrating the laser-beam working machine.
[FIG. 6] FIG. 6 is a side view of the laser-beam working machine according to the first embodiment, schematically illustrating the laser-beam working machine.
[FIG. 7] FIG. 7 is a side view of the laser-beam working machine according to the first embodiment, schematically illustrating the laser-beam working machine.
[FIG. 8] FIG. 8 is a side view of a laser-beam working machine according to a second embodiment, schematically illustrating the laser-beam working machine.
[FIG. 9] FIG. 9 is a side view of the laser-beam working machine according to the second embodiment, schematically illustrating an enlarged part of the laser-beam working machine.
[FIG. 10] FIG. 10 is a side view of the laser-beam working machine according to the second embodiment, schematically illustrating the enlarged part of the laser-beam working machine.
[FIG. 11] FIG. 11 is a cross-sectional view taken along the arrow E-E in FIG. 8.
[FIG. 12] FIG. 12 is a front view of a second chuck, schematically illustrating an example of the second chuck.
[FIG. 13] FIG. 13 is a cross-sectional view taken along the arrow F-F in FIG. 8.
[FIG. 14] FIG. 14 is a cross-sectional view of a grip member and a plurality of guide rollers, schematically illustrating a state in which the grip member is inserted on inner sides of the plurality of guide rollers.
[FIG. 15] FIG. 15 is a cross-sectional view of the grip member and the plurality of guide rollers, schematically illustrating the state in which the grip member is inserted on the inner sides of the plurality of guide rollers.
[FIG. 16] FIG. 16 is a cross-sectional view of the grip member and the plurality of guide rollers, schematically illustrating the state in which the grip member is inserted on the inner sides of the plurality of guide rollers.
[FIG. 17] FIG. 17 is a cross-sectional view of the grip member and the plurality of guide rollers, schematically illustrating the state in which the grip member is inserted on the inner sides of the plurality of guide rollers.
[FIG. 18] FIG. 18 is a side view of the laser-beam working machine according to the second embodiment, schematically illustrating an enlarged part of the laser-beam working machine.
[FIG. 19] FIG. 19 is a side view of the laser-beam working machine according to the second embodiment, schematically illustrating the enlarged part of the laser-beam working machine.
[FIG. 20] FIG. 20 is a side view of the laser-beam working machine according to the second embodiment, schematically illustrating the enlarged part of the laser-beam working machine.
[FIG. 21] FIG. 21 a functional block diagram of a controller and a plurality of devices to be controlled by the controller, schematically illustrating the controller and the devices.
[FIG. 22] FIG. 22 is a block diagram of a hardware configuration of the controller, as an example.
[FIG. 23] FIG. 23 schematically illustrates a state in which rotation phases of a plurality of grippers are respectively coincident with rotation phases of the plurality of guide rollers.
[FIG. 24] FIG. 24 schematically illustrates a state in which the rotation phases of the plurality of grippers and the rotation phases of the plurality of guide rollers are shifted from each other by 45 degrees.
[FIG. 25] FIG. 25 is a side view of the laser-beam working machine according to the second embodiment, schematically illustrating the enlarged part of the laser-beam working machine.
[FIG. 26] FIG. 26 schematically illustrates one processing step in a laser-beam machining method according to an embodiment.
[FIG. 27] FIG. 27 schematically illustrates another processing step in the laser-beam machining method according to an embodiment.
[FIG. 28] FIG. 28 is a flowchart of the laser-beam machining method according to an embodiment, as an example.
[FIG. 29] FIG. 29 is a flowchart of the laser-beam machining method according to an embodiment, as an example.

### Description of Embodiments

Hereinafter, by referring to the drawings, a laser-beam working machine 1 and a laser-beam machining method in embodiments will be described. It is to be noted that in the following description of the embodiments, identical reference numerals are used to denote identical portions, members, or components having identical functions, and redundant description of identical portions, members, or components will be omitted.

### (Definitions of Directions)

Herein, the movement direction of a first chuck 3 when the first chuck 3 moves toward a laser head 20 will be defined as a "first direction *DR1",* and the direction opposite to the first direction *DR1* will be defined as a "second direction *DR2".* The first direction *DR1* is coincident with a direction from a base end portion Wb of a workpiece W (in other words, an end portion on the second direction *DR2* side of the workpiece W) to be machined by a laser head 20 toward a tip end portion Wa of the workpiece W (in other words, an end portion on the first direction *DR1* side of the workpiece W).

### (First Embodiment)

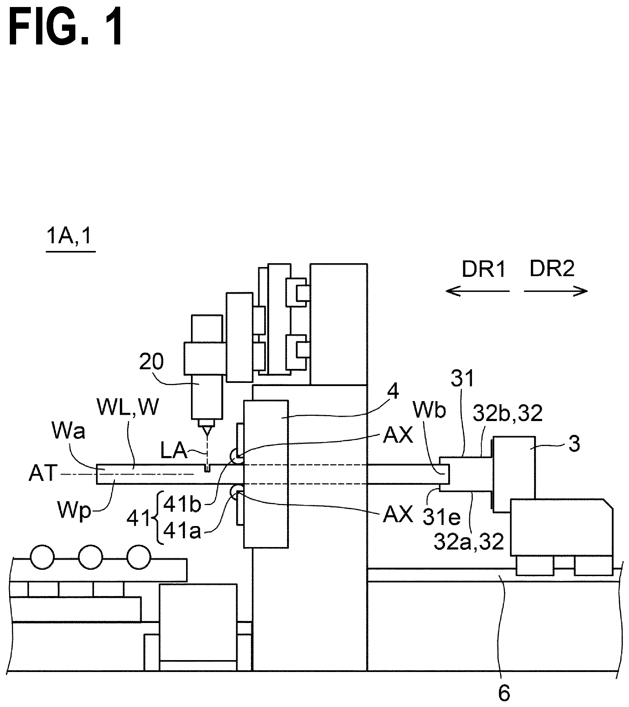

By referring to FIGs. 1 to 7, a laser-beam working machine 1A according to a first embodiment will be described. FIGs. 1 to 7 are side views of the laser-beam working machine 1A according to the first embodiment, schematically illustrating the laser-beam working machine 1A.

The laser-beam working machine 1A according to the first embodiment includes a laser head 20, a first chuck 3, a second chuck 4, and a mover 6.

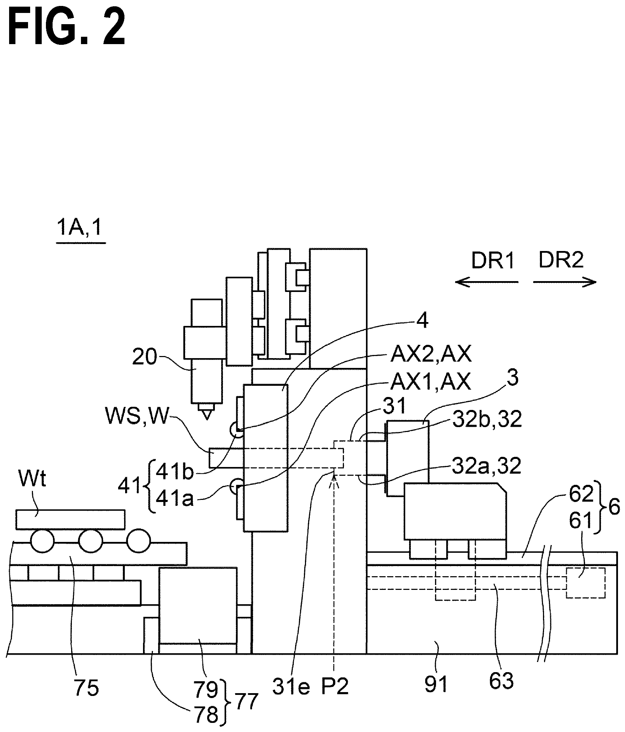

The laser head 20 machines the workpiece W by irradiating the workpiece W extending in the first direction *DR1* with a laser beam LA. The laser head 20 may cut the workpiece W by irradiating the workpiece W with the laser beam LA, or may form a hole in the workpiece W by irradiating the workpiece W with the laser beam LA. In an example of FIG. 1, the workpiece W is a long workpiece WL. As illustrated in FIG. 2, by cutting the long workpiece WL with a laser beam, the laser head 20 is capable of producing a machined product Wt and a short workpiece WS from the long workpiece WL. In other words, the short workpiece WS is produced by laser-beam machining of the long workpiece WL. As illustrated in FIG. 2, only a grip member 31 of the first chuck 3 is capable of supporting the short workpiece WS.

The long workpiece WL and the short workpiece WS will be hereinafter collectively referred to as "workpiece W". In addition, the workpiece that can be supported only by the grip member 31 of the first chuck 3 will be referred to as the "short workpiece WS".

The first chuck 3 includes the grip member 31 for holding the workpiece W. The first chuck 3 is movable together with the workpiece W in the first direction *DR1.*

As illustrated in FIG. 1, the second chuck 4 is provided between the laser head 20 and the first chuck 3 in a direction along the first direction *DR1.* More specifically, the second chuck 4 is provided on the first direction *DR1* side relative to the first chuck 3, and the laser head 20 is provided on the first direction *DR1* side relative to the second chuck 4. The second chuck 4 includes a plurality of guide rollers 41, which interpose the workpiece W. The plurality of guide rollers 41 guide the movement of the workpiece W (more specifically, the long workpiece WL) in either the first direction *DR1* or the second direction *DR2.* In the example illustrated in FIG. 1, each of the plurality of guide rollers 41 is rotatable about a rotation axis AX, which is perpendicular to the first direction *DR1.*

The plurality of guide rollers 41 are provided so as to interpose the workpiece W (more specifically, the long workpiece WL). In the example illustrated in FIG. 1, the plurality of guide rollers 41 include: a first guide roller 41a to be in contact with the workpiece W (more specifically, the long workpiece WL); and a second guide roller 41b to be in contact with the workpiece W (more specifically, the long workpiece WL). The second guide roller 41b is provided on a side opposite to the first guide roller 41a with respect to the workpiece W.

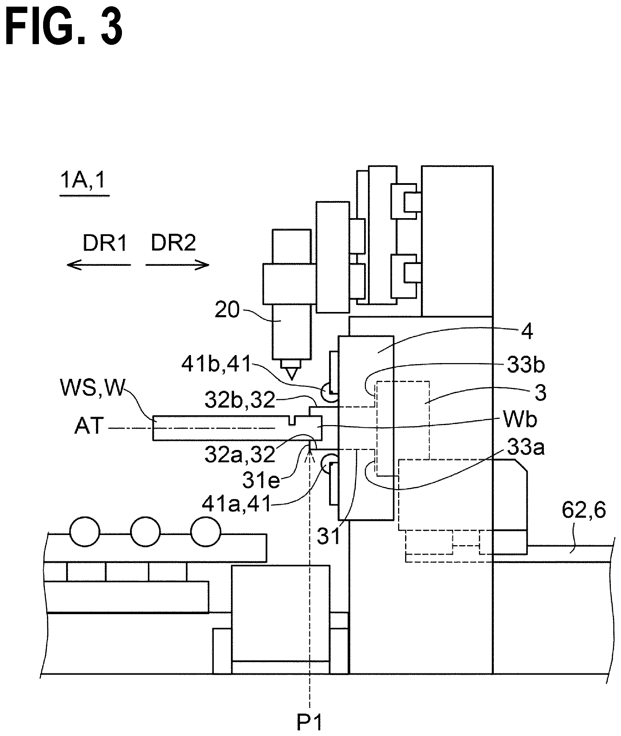

The mover 6 moves the first chuck 3 in either the first direction *DR1* or the second direction *DR2*. As illustrated in FIGs. 2 and 3, the mover 6 moves the first chuck 3 in the first direction *DR1* so that an end face 31e of the grip member 31 moves between the plurality of guide rollers 41 and approaches the laser head 20. In other words, the mover 6 moves the first chuck 3 in the first direction *DR1,* thereby moving a tip end portion of the grip member 31 (more specifically, the end face 31e on the first direction *DR1* side of the grip member 31) of the first chuck 3 to a first position P1 (see FIG. 3) on the first direction *DR1* side relative to the plurality of guide rollers 41 from a second position P2 (see FIG. 2) on the second direction *DR2* side relative to the plurality of guide rollers 41.

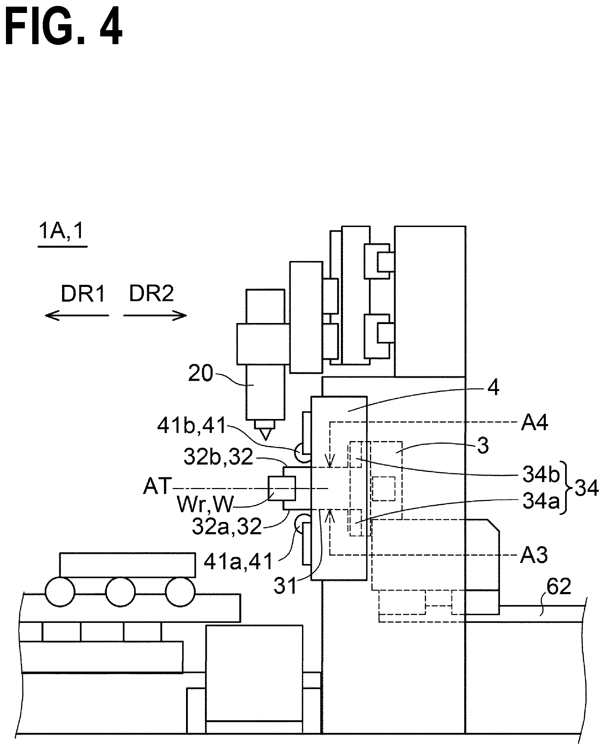

In the first embodiment, the position of the end face 31e of the grip member 31 of the first chuck 3 is changeable to the first position P1 (see FIG. 3) on the first direction *DR1* side relative to the plurality of guide rollers 41 from the second position P2 (see FIG. 2) on the second direction *DR2* side relative to the plurality of guide rollers 41. In this case, as illustrated in FIG. 3, the base end portion Wb of the workpiece W (more specifically, the short workpiece WS) held by the grip member 31 can be made closer to the laser head 20. In this manner, the length of a remaining workpiece Wr (see FIG. 4) produced by machining of the workpiece W extending in the first direction *DR1* can be shortened.

In addition, the length of the remaining workpiece Wr is shortened, the amount of unused material is reduced, and the load on the environment is reduced. It is to be noted that herein, the "remaining workpiece Wr" means an end material produced by the laser-beam machining of the workpiece W.

### (Optionally Additional Configuration)

Subsequently, by referring to FIGs. 1 to 7, optionally additional configurations to be adoptable in the first embodiment will be described.

### (Mover 6)

In the example illustrated in FIG. 2, the mover 6 includes: a drive 61 (more specifically, a motor such as a servo motor), which moves the first chuck 3 in either the first direction *DR1* or the second direction *DR2;* and a guide member 62 (for example, a guide rail) for guiding the movement of the first chuck 3 in either the first direction *DR1* or the second direction *DR2.* Additionally, the mover 6 may include a power transmission member 63 (for example, a ball screw) for converting the power of the drive 61 into the movement of the first chuck 3. It is to be noted that in a case where the drive 61 is a linear motor, the ball screw can be omitted. The mover 6 may also convert the rotational force of the drive 61 into the movement of the first chuck 3 in either the first direction *DR1* or the second direction *DR2* via a rack and pinion. In the example illustrated in FIG. 2, the drive 61 (more specifically, a motor) is provided in a first base 91. However, alternatively, the drive 61 (more specifically, the motor) may be provided in the first chuck 3. In other words, the first chuck 3 may be self-propelled.

### (Roller Mover 43)

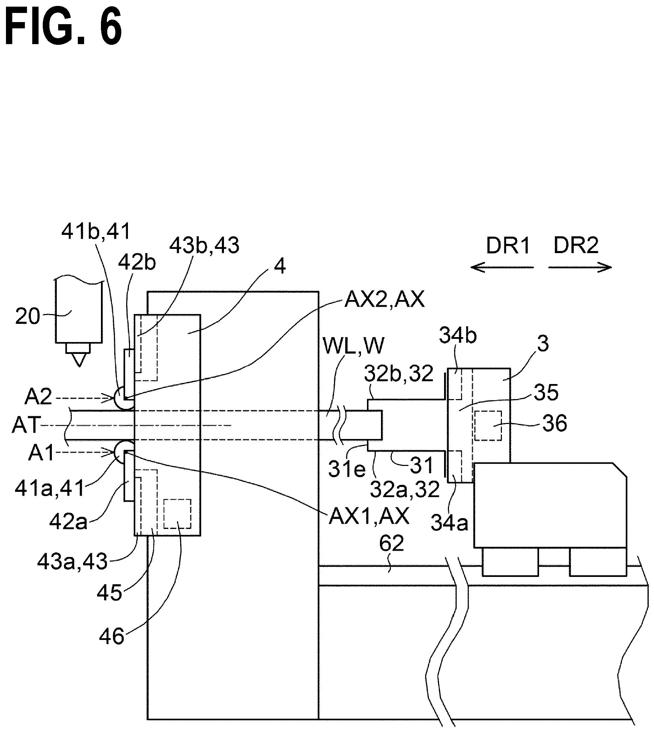

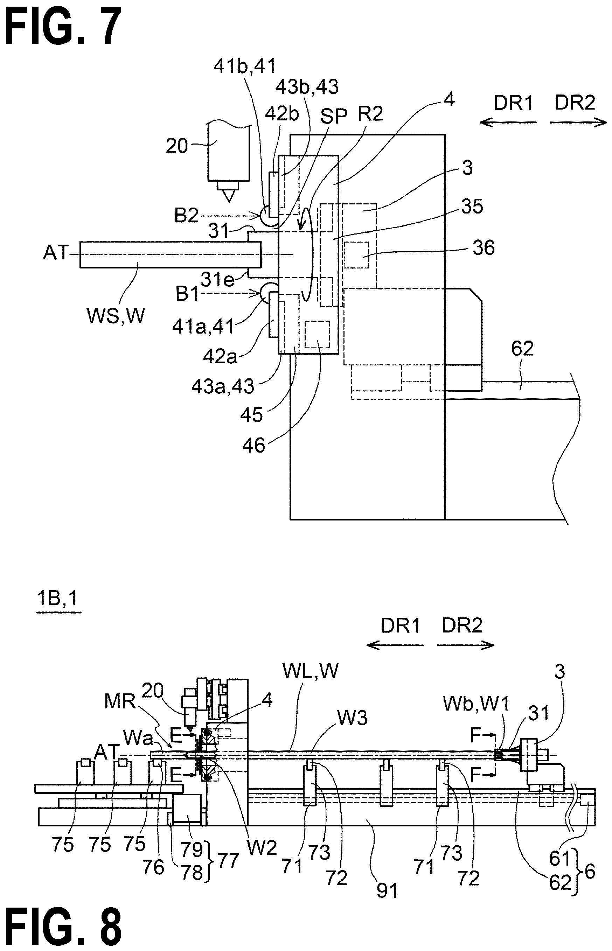

In the example illustrated in FIG. 6, the laser-beam working machine 1A (more specifically, the second chuck 4) includes a roller mover 43, which moves the plurality of guide rollers 41. The roller mover 43 moves the plurality of guide rollers 41 in a direction not parallel to the first direction *DR1* (in other words, a direction different from the first direction *DR1* and the second direction *DR2*), between advanced positions (A1, A2) in contact with the workpiece W (more specifically, the long workpiece WL) and retracted positions (B1, B2) that allow the end face 31e of the grip member 31 to pass through the plurality of guide rollers 41 (see FIG. 7). More specifically, the roller mover 43 moves the plurality of guide rollers 41 between the advanced positions (A1, A2) in contact with the workpiece W (more specifically, the long workpiece WL) and the retracted positions (B1, B2) in which the distance between each of the plurality of guide rollers 41 and a first axis AT is longer than the distance between each of the plurality of guide rollers 41 in the advanced positions (A1, A2) and the first axis AT, and which thus allows the end face 31e of the grip member 31 to pass through the plurality of guide rollers 41. It is to be noted that the above-described first axis AT is an axis coincident with the rotation axis of the grip member 31 (in other words, the rotation axis of the workpiece W held by the grip member 31) to be rotated by a first rotation drive 36 as will be described later. In addition, the above-described first axis AT is an axis coincident with the rotation axis of the plurality of guide rollers 41 (in other words, the rotation axis of the workpiece W, which is interposed by the plurality of guide rollers 41) to be rotated by a second rotation drive 46 as will be described later.

The roller mover 43 includes a first roller mover 43a, which moves the first guide roller 41a between a first advanced position A1 and a first retracted position B1. In addition, the roller mover 43 also includes a second roller mover 43b, which moves a second guide roller 41b between a second advanced position A2 and a second retracted position B2. The power source (for example, an actuator or a motor) with which the second roller mover 43b moves the second guide roller 41b may be identical to or different from the power source (for example, an actuator or a motor) with which the first roller mover 43a moves the first guide roller 41a.

As illustrated in FIG. 6, in a case where the plurality of guide rollers 41 are in the advanced positions (A1, A2), the workpiece W (more specifically, the long workpiece WL) is supported in a stable manner by the grip member 31 and the plurality of guide rollers 41. In addition, as illustrated in FIG. 7, in a case where the plurality of guide rollers 41 are in the retracted positions (B1, B2), interference between the grip member 31, which moves in the first direction *DR1,* and the plurality of guide rollers 41 is avoided.

### (Guide Roller 41)

In the example illustrated in FIG. 6, the plurality of guide rollers 41 includes the first guide roller 41a and the second guide roller 41b. The plurality of guide rollers 41 are arranged in the vicinity of the laser head 20, and are capable of supporting a tip end part of the long workpiece WL or a central part of the long workpiece WL.

With regard to the magnitude of holding force for holding the workpiece W by the plurality of guide rollers 41, any magnitude is applicable, as long as it is possible to guide the movement of the workpiece W in either the first direction *DR1* or the second direction *DR2.* Such holding force may be substantially zero.

The first guide roller 41a is supported to be rotatable about a first rotation axis AX1 by a first roller support member 42a, which is included in the second chuck 4. The first rotation axis AX1 is perpendicular to the first direction *DR1.*

The second guide roller 41b is rotatably supported about a second rotation axis AX2 by a second roller support member 42b, which is included in the second chuck 4. The second rotation axis AX2 is perpendicular to the first direction *DR1.* In addition, in the example illustrated in FIG. 6, the second rotation axis AX2 is parallel to the first rotation axis AX1.

As illustrated in FIG. 7, in a state in which the grip member 31 is inserted on inner sides of the plurality of guide rollers 41 (more specifically, in a state in which the grip member 31 is partially provided in an inner region SP, which is defined by the plurality of guide rollers 41), the grip member 31 is rotatable about the first axis AT (see an arrow R2). In this case, in a state in which the grip member 31 is located in the vicinity of the laser head 20, the posture of the workpiece W (more specifically, the short workpiece WS) about the first axis AT is changeable. It is to be noted that the first axis AT is an axis parallel to the first direction *DR1.*

In the example illustrated in FIG. 7, in a state in which the grip member 31 is inserted on the inner sides of the plurality of guide rollers 41, the plurality of guide rollers 41 are rotatable about the first axis AT together with the grip member 31. In this case, in order to rotate the grip member 31 about the first axis AT, there is no need to additionally retract the plurality of guide rollers 41 respectively in directions away from the first axis AT.

### (First Rotation Drive 36 and Second Rotation Drive 46)

In the example illustrated in FIG. 6, the first chuck 3 includes a first rotation drive 36, which rotates the grip member 31 about the first axis AT, which is parallel to the first direction *DR1.* The first rotation drive 36 rotates the grip member 31 and a first rotor 35, which supports the grip member 31, about the first axis AT. In the example illustrated in FIG. 7, the first rotation drive 36 is capable of rotating the grip member 31 about the first axis AT, in the state in which the grip member 31 is inserted on the inner sides of the plurality of guide rollers 41.

In the example illustrated in FIG. 6, the second chuck 4 includes a second rotation drive 46, which rotates the plurality of guide rollers 41 about the first axis AT, which is parallel to the first direction *DR1.* The second rotation drive 46 rotates the plurality of guide rollers 41 and a second rotor 45, which supports the plurality of guide rollers 41, about the first axis AT. In the example illustrated in FIG. 7, the second rotation drive 46 is capable of rotating the plurality of guide rollers 41 about the first axis AT, in the state in which the grip member 31 is inserted on the inner sides of the plurality of guide rollers 41.

In a case where the laser-beam working machine 1A includes two rotation drives (36, 46), the long workpiece WL, which is supported by both the first chuck 3 and the second chuck 4, is made rotatable about the first axis AT in a stable manner.

In addition, in the case where the laser-beam working machine 1A includes the two rotation drives (36, 46), the plurality of guide rollers 41 and the grip member 31 are made rotatable about the first axis AT in a smooth manner, in the state in which the grip member 31 is inserted on the inner sides of the plurality of guide rollers 41 (see FIG. 7).

Alternatively, only one of the first rotor 35 and the second rotor 45 may be driven to actively rotate about the first axis AT by the rotation drive, and the other one of the first rotor 35 and the second rotor 45 may passively rotate about the first axis AT. In this case, the other one of the first rotor 35 and the second rotor 45 is supported by a support member so as to be freely rotatable about the first axis AT via a bearing.

### (Grip Member 31)

The grip member 31 is capable of holding the workpiece W (more specifically, the base end portion Wb of the workpiece W). In the example illustrated in FIG. 3, the grip member 31 includes: a first gripper 32a to be in contact with the workpiece W; and a second gripper 32b to be in contact with the workpiece W. The second gripper 32b is provided on a side opposite to the first gripper 32a with respect to the workpiece W. In addition, in the example illustrated in FIG. 3, the grip member 31 includes: a first gripper support body 33a, which supports the first gripper 32a; and a second gripper support body 33b, which supports the second gripper 32b.

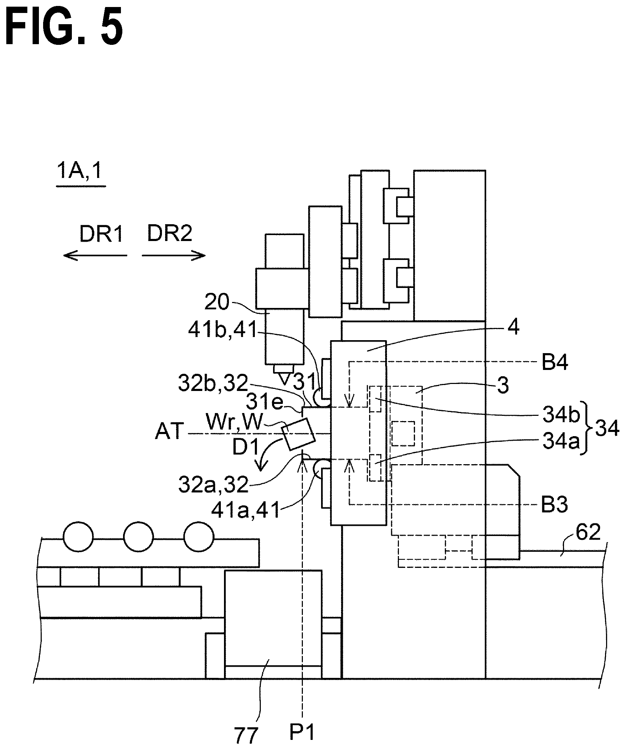

In the example illustrated in FIG. 5, in the state in which the grip member 31 is inserted on the inner sides of the plurality of guide rollers 41, the grip member 31 is capable of releasing holding the workpiece W (for example, holding the remaining workpiece Wr produced by the laser-beam machining of the workpiece W). More specifically, as illustrated in FIGs. 4 and 5, in the state in which the grip member 31 is inserted on the inner sides of the plurality of guide rollers 41, the first gripper 32a and the second gripper 32b are respectively capable of retracting in the directions away from the first axis AT (more specifically, in directions respectively from the first axis AT toward the plurality of guide rollers 41).

In the example illustrated in FIG. 5, in a state in which the end face 31e of the grip member 31 is located at the first position P1 on the first direction *DR1* side relative to the plurality of guide rollers 41, holding of the workpiece W (more specifically, holding of the remaining workpiece Wr) by the grip member 31 is releasable. In this case, the remaining workpiece Wr can be dropped onto the first direction *DR1* side (in other words, the workpiece machining area side where the machining is performed by the laser head 20) relative to the plurality of guide rollers 41. In the example illustrated in FIG. 5, it is unlikely that the remaining workpiece Wr will drop onto the second direction *DR2* side relative to the plurality of guide rollers 41.

### (Gripper Mover 34)

In the example illustrated in FIGs. 4 and 5, the laser-beam working machine 1A (more specifically, the first chuck 3) includes a gripper mover 34, which moves the plurality of grippers 32 including the first gripper 32a and the second gripper 32b between holding positions (A3, A4) in contact with the workpiece (more specifically, the remaining workpiece Wr of the workpiece) and release positions (B3, B4) spaced apart from the workpiece (more specifically, the remaining workpiece Wr of the workpiece). The gripper mover 34 includes: a first gripper mover 34a, which moves the first gripper 32a between a first holding position A3 and a first release position B3; and the second gripper mover 34b, which moves the second gripper 32b between a second holding position A4 and a second release position B4. The power source (for example, an actuator or a motor) with which the second gripper mover 34b moves the second gripper 32b may be identical to or different from the power source (for example, an actuator or a motor) with which the first gripper mover 34a moves the first gripper 32a.

In the example illustrated in FIGs. 4 and 5, the gripper mover 34 moves the plurality of grippers 32, which include the first gripper 32a and the second gripper 32b, from the holding positions (A3, A4) in contact with the remaining workpiece Wr of the workpiece to the release positions (B3, B4) respectively toward the plurality of guide rollers 41. As a result, the remaining workpiece Wr is released from the grip member 31, and the remaining workpiece Wr drops onto the first direction *DR1* side relative to the plurality of guide rollers 41 (see an arrow D1 in FIG. 5). Therefore, a pusher for pushing out the remaining workpiece Wr from the grip member 31 to the first direction *DR1* side can be omitted. The pusher and the operation of the pusher are omitted, and thus the time needed for unloading the remaining workpiece Wr can be shortened.

### (Workpiece W)

In the first embodiment, the workpiece (see FIG. 1) is, for example, a pipe Wp, which extends in the first direction *DR1.* In addition, the short workpiece WS (see FIG. 2) is a short pipe that is produced by the laser-beam machining of the pipe Wp and that can be supported only by the grip member 31. The cross-sectional shape of the pipe Wp in a direction perpendicular to the first direction *DR1* may be rectangular, circular, or triangular. The workpiece W may also be a workpiece other than the pipe. For example, the workpiece W may be a long workpiece having a letter C-shaped cross-section, a long workpiece having a letter H-shaped cross-section, or a long workpiece having a letter L-shaped cross-section.

### (Second Embodiment)

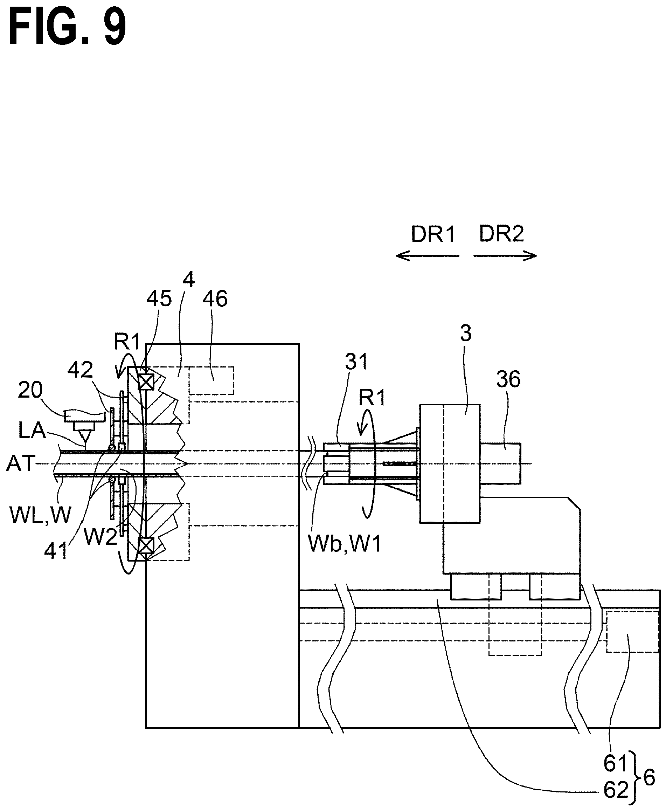

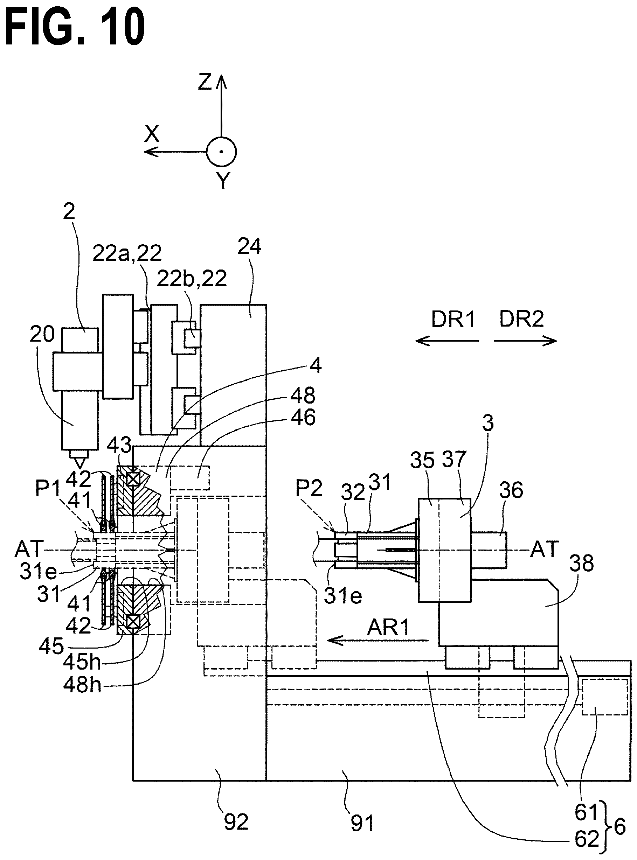

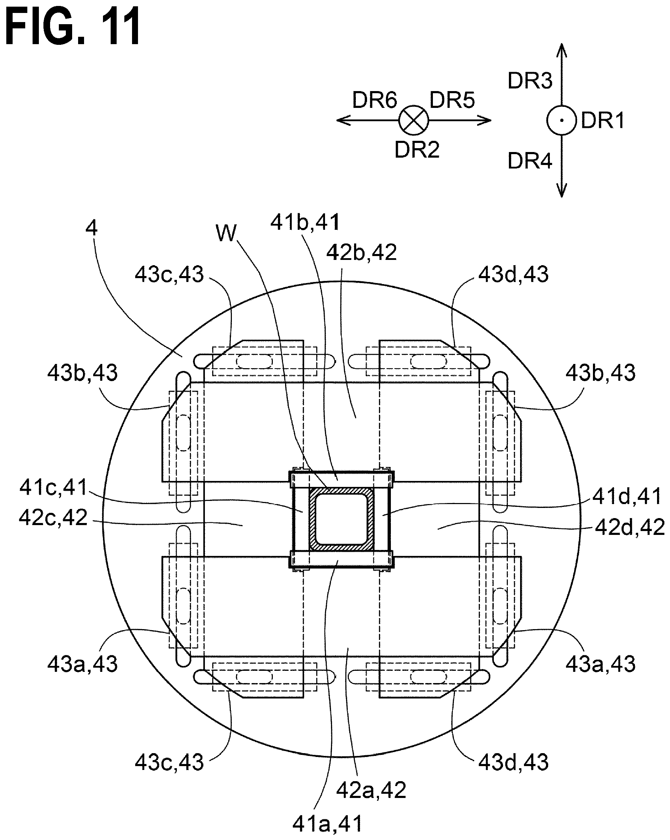

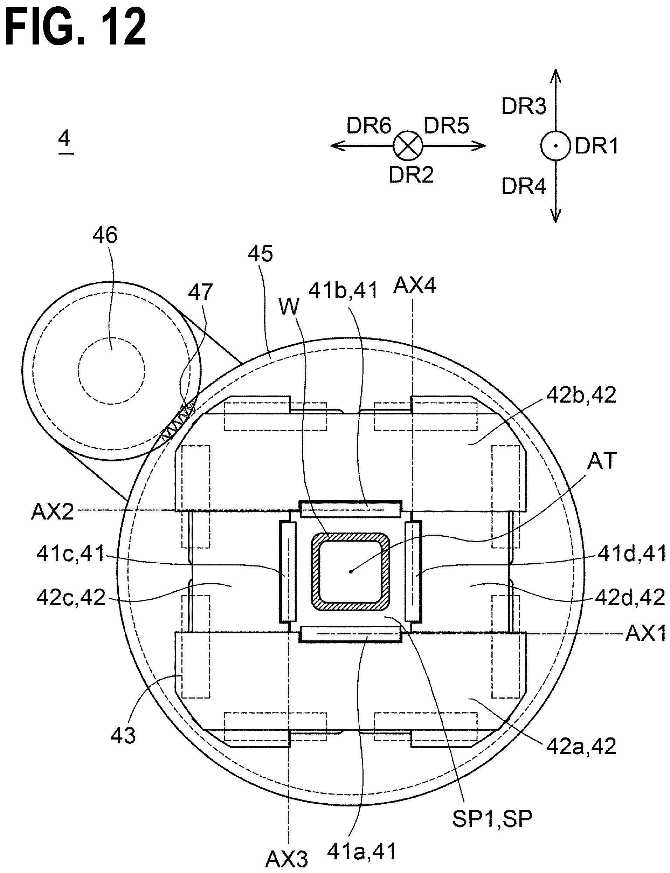

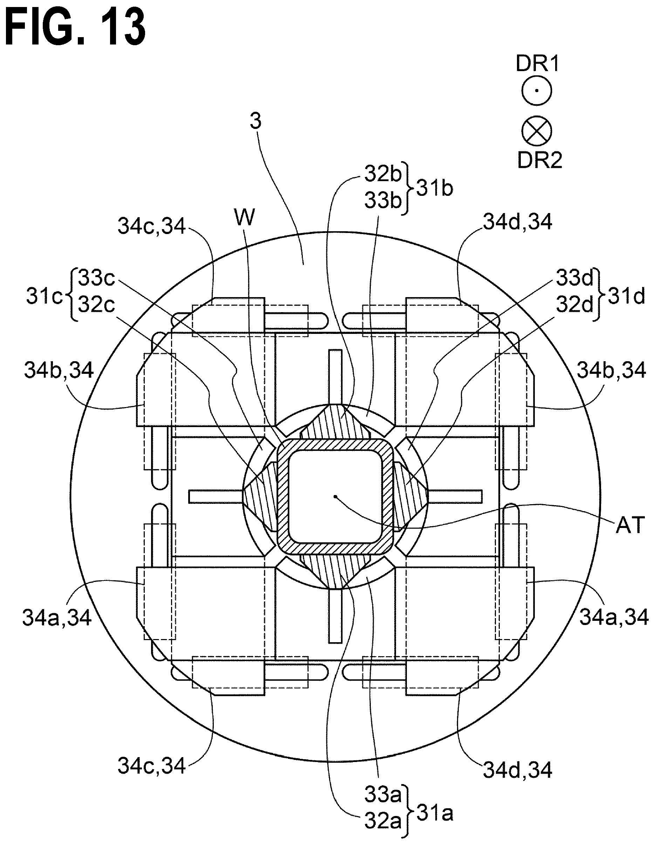

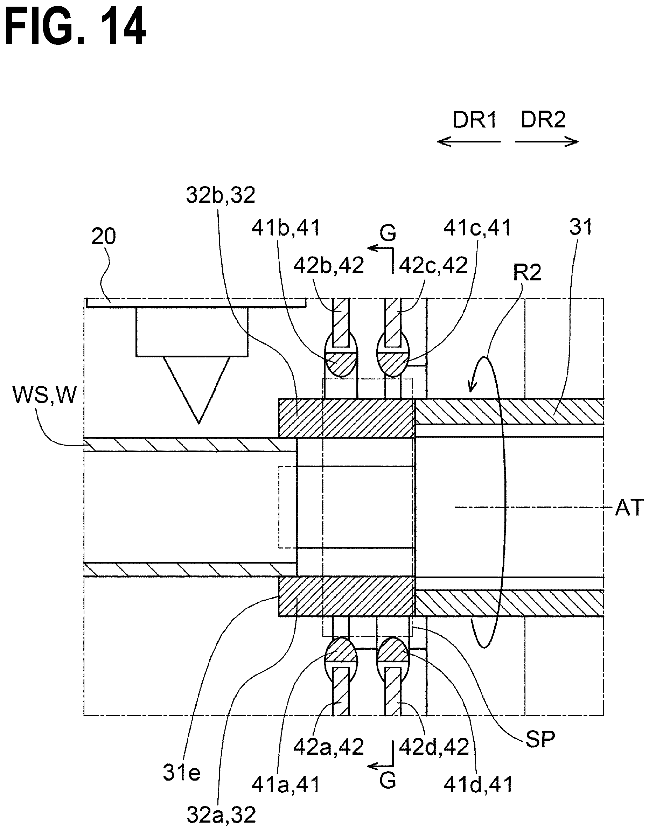

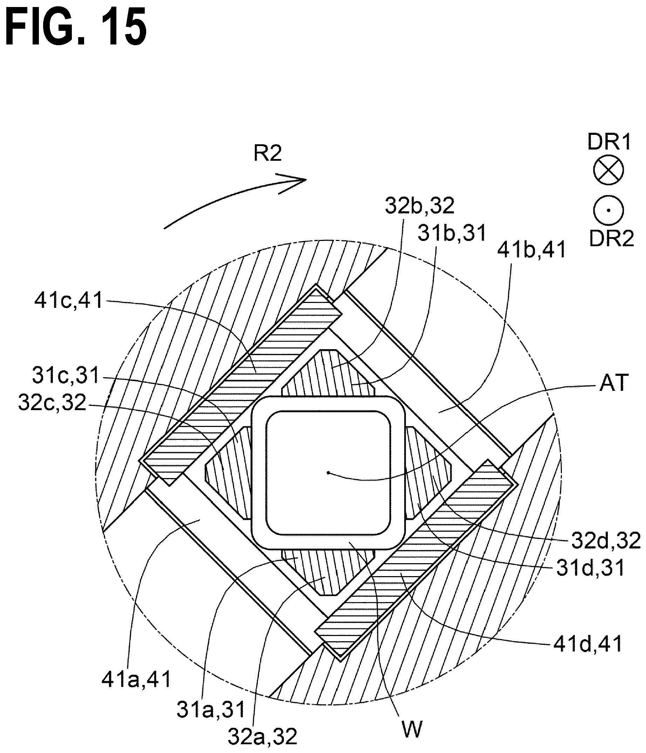

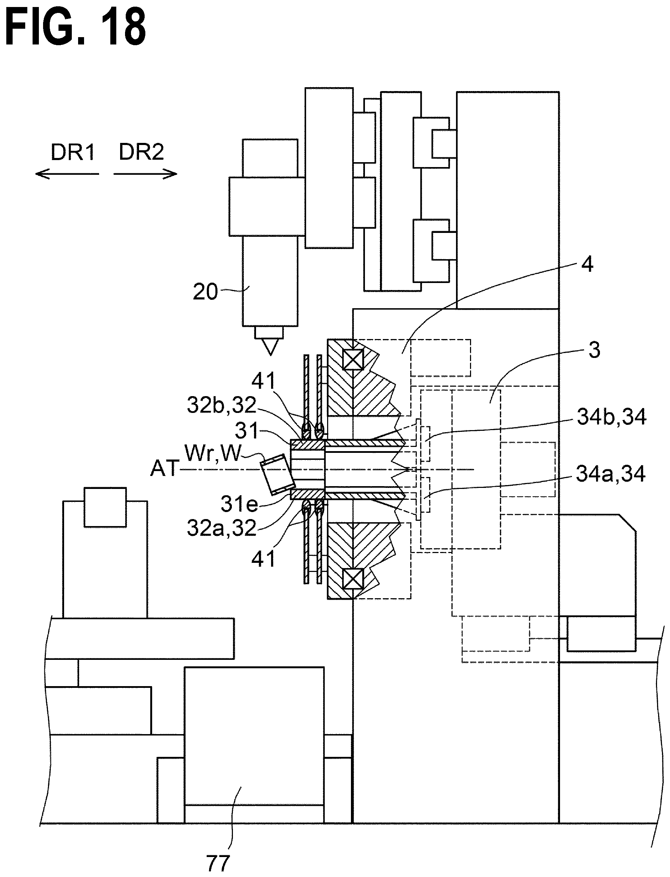

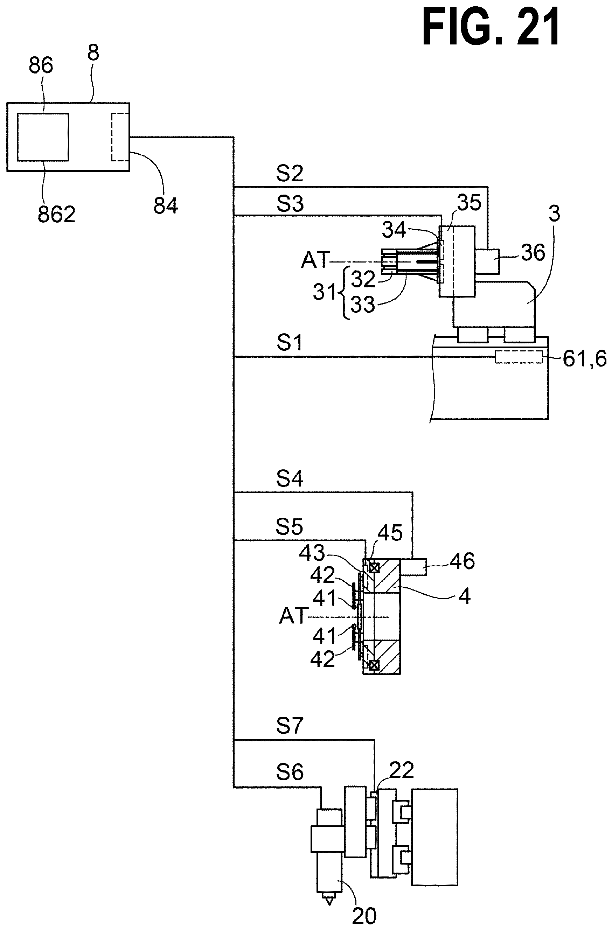

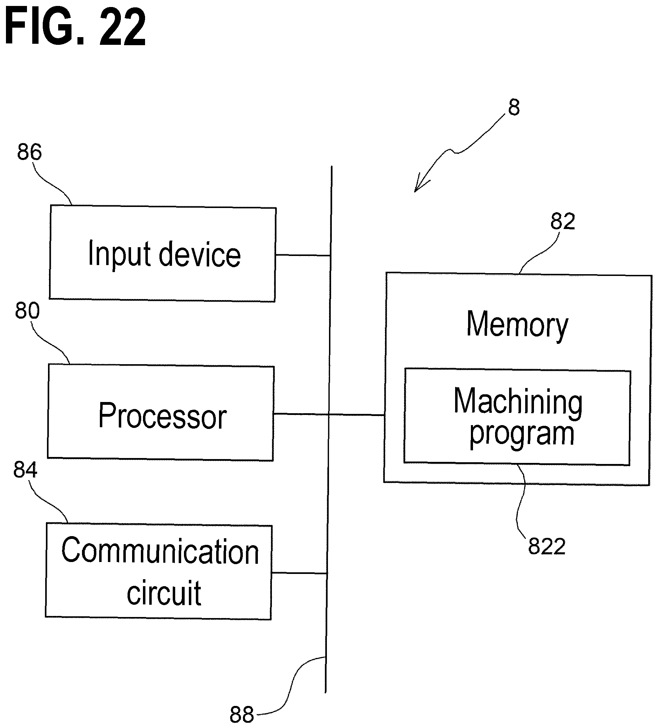

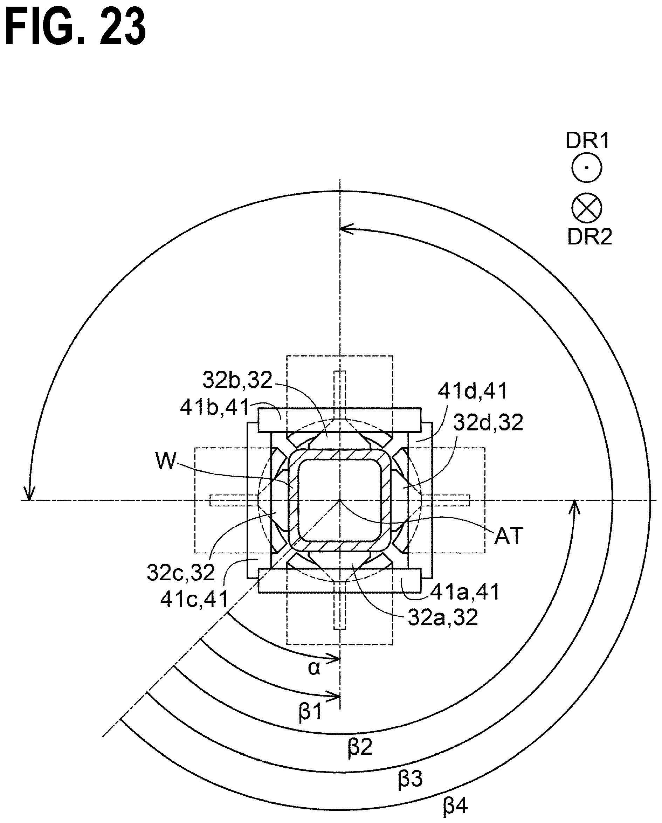

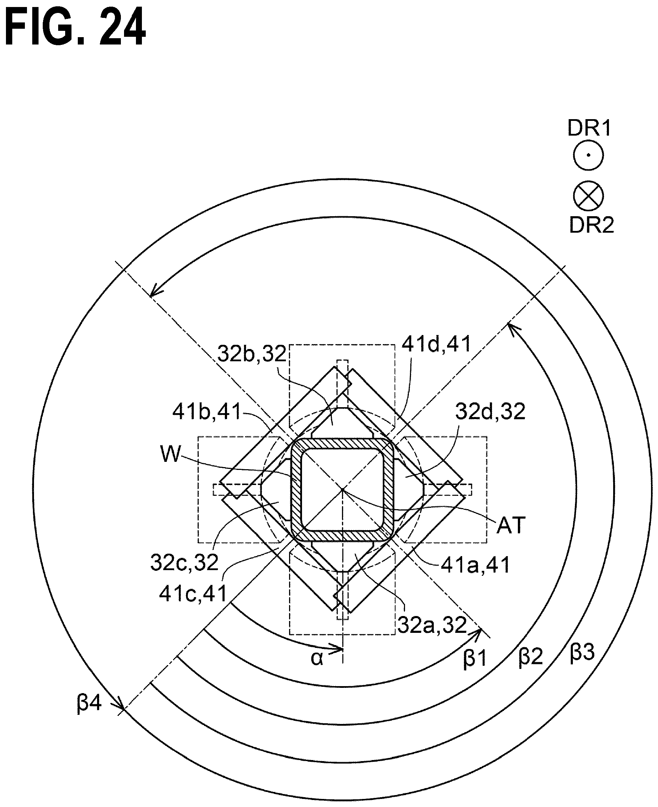

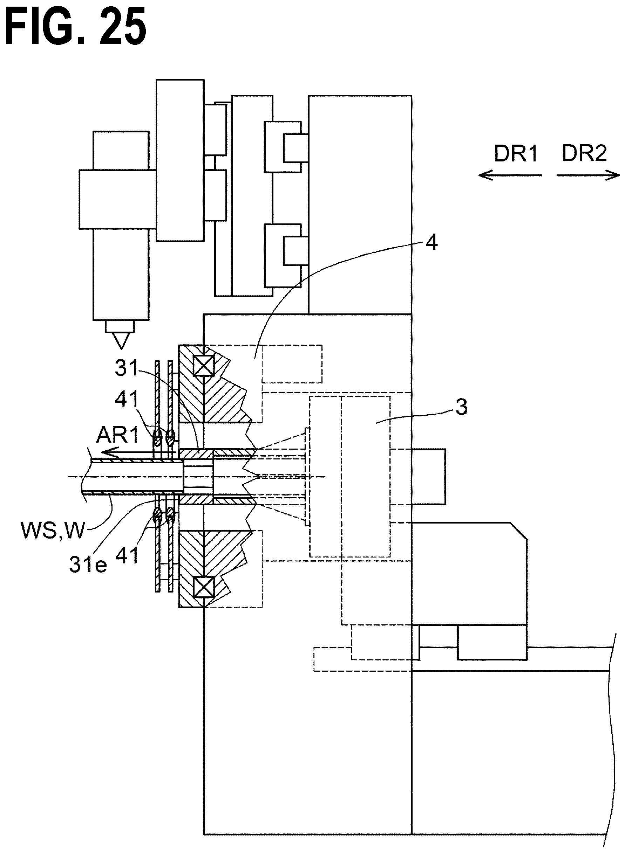

By referring to FIGs. 8 to 25, a laser-beam working machine 1B according to a second embodiment will be described. FIG. 8 is a side view of the laser-beam working machine 1B according to the second embodiment, schematically illustrating the laser-beam working machine 1B. FIGs. 9 and 10 are side views of the laser-beam working machine 1B according to the second embodiment, each illustrating an enlarged part of the laser-beam working machine 1B. FIG. 11 is a cross-sectional view taken along the arrow E-E in FIG. 8. FIG. 12 is a front view of the second chuck 4, schematically illustrating the second chuck as an example. FIG. 13 is a cross-sectional view taken along the arrow F-F in FIG. 8. FIGs. 14 to 17 are cross-sectional views of a grip member 31 and a plurality of guide rollers 41, each schematically illustrating the state in which the grip member 31 is inserted on the inner sides of the plurality of guide rollers 41. It is to be noted that FIG. 14 is a cross-sectional view on a plane parallel to the first axis AT, and FIGs. 15 to 17 are each a cross-sectional view on a plane perpendicular to a first axis AT and passing through a third guide roller 41c and a fourth guide roller 41d. FIGs. 18 to 20 are each a side view of the laser-beam working machine 1B according to the second embodiment, schematically illustrating an enlarged part of the laser-beam working machine 1B. FIG. 21 is a functional block diagram of a controller 8 and a plurality of devices to be controlled by the controller 8, schematically illustrating the controller and the plurality of devices. FIG. 22 is a block diagram of the controller 8, schematically illustrating a hardware configuration of the controller. FIG. 23 schematically illustrates a state in which the rotation phases of a plurality of grippers 32 are coincident with the rotation phases of the plurality of guide rollers 41. FIG. 24 schematically illustrates a state in which the rotation phases of the plurality of grippers 32 and the rotation phases of the plurality of guide rollers 41 are shifted from each other by 45 degrees. FIG. 25 is a side view of the laser-beam working machine 1B according to the second embodiment, schematically illustrating the enlarged part of the laser-beam working machine 1B. It is to be noted that in FIGs. 8 to 10, 18 to 20, and 25, in order to make an inner state of the second chuck 4 recognizable, the second chuck 4 is partially cut out, and a cross-sectional view of such a cut out part is illustrated.

In the second embodiment, the following description will mainly focus on those respects in which the second embodiment is different from the first embodiment, and those respects already described in the first embodiment will not be described in the second embodiment to avoid redundancy. Thus, it will be readily appreciated that those respects that are not explicitly described in the second embodiment but are described in the first embodiment apply in the second embodiment. Conversely, all respects to be described in the second embodiment are applicable to the first embodiment.

As illustrated in FIG. 8, the laser-beam working machine 1B according to the second embodiment includes: a laser head 20; a first chuck 3; a second chuck 4; and a mover 6.

As illustrated in FIG. 9, by irradiating a workpiece W, which extends in a first direction *DR1,* with a laser beam LA, the laser head 20 machines the workpiece W. The first chuck 3 includes a grip member 31 for holding the workpiece W, and is movable together with the workpiece W in the first direction *DR1.* The second chuck 4 is provided between the laser head 20 and the first chuck 3 in a direction along the first direction *DR1.* In addition, the second chuck 4 includes a plurality of guide rollers 41. The plurality of guide rollers 41 interpose the workpiece W, and guide the movement of the workpiece W in the first direction *DR1.* As illustrated in FIG. 10, the mover 6 is capable of moving the first chuck 3 in the first direction *DR1* so that an end face 31e of the grip member 31 moves among the plurality of guide rollers 41 and approaches the laser head 20. In other words, the mover 6 is capable of moving the position of the end face 31e on the first direction *DR1* side of the grip member 31 to a first position P1 on the first direction *DR1* side relative to the plurality of guide rollers 41 from a second position P2 on the second direction *DR2* side relative to the plurality of guide rollers 41.

Therefore, the second embodiment has effects similar to those in the first embodiment.

### (Optionally Additional Configuration)

Subsequently, by referring now to FIGs. 8 to 25, optionally additional configurations to be adoptable in the second embodiment will be described.

### (Guide Roller 41, Roller Support Member 42)

FIG. 11 is a cross-sectional view taken along the arrow E-E in FIG. 8. In the example illustrated in FIG. 11, the second chuck 4 includes a plurality of guide rollers 41, which includes a first guide roller 41a and a second guide roller 41b. The second chuck 4 may include the first guide roller 41a, the second guide roller 41b, a third guide roller 41c, and a fourth guide roller 41d.

In the example illustrated in FIG. 11, the positions of the third guide roller 41c and the fourth guide roller 41d in directions along the first direction *DR1* are slightly different from the positions of the first guide roller 41a and the second guide roller 41b in the directions along the first direction *DR1.* Hence, when viewed in a direction along the second direction *DR2,* the third guide roller 41c is movable to a position partially overlapping the first guide roller 41a and the second guide roller 41b. In addition, when viewed in the direction along the second direction *DR2,* the fourth guide roller 41d is movable to a position partially overlapping the first guide roller 41a and the second guide roller 41b.

The second chuck 4 includes a plurality of roller support members 42, which respectively support the plurality of guide rollers 41. Each of the plurality of roller support members 42 is, for example, a plate-shaped body. In the example illustrate in FIG. 12, the second chuck 4 includes: a first roller support member 42a, which supports the first guide roller 41a to be rotatable about the first rotation axis AX1; a second roller support member 42b, which supports the second guide roller 41b to be rotatable about the second rotation axis AX2, and a third roller support member 42c, which supports the third guide roller 41c to be rotatable about a third rotation axis AX3; and a fourth roller support member 42d, which supports the fourth guide roller 41d to be rotatable about a fourth rotation axis AX4.

In the example illustrated in FIG. 12, the first rotation axis AX1 is perpendicular to the first direction *DR1,* and the second rotation axis AX2 is parallel to the first rotation axis AX1. In addition, the third rotation axis AX3 is perpendicular to both the first direction *DR1* and the first rotation axis AX1, and the fourth rotation axis AX4 is parallel to the third rotation axis AX3.

In the example illustrated in FIG. 12, when viewed in the direction along the second direction *DR2,* a rectangular inner region SP1 is defined by the plurality of guide rollers 41. More specifically, when viewed in the direction along the second direction DR2, the rectangular inner region SP1 is defined by the first guide roller 41a, the second guide roller 41b, the third guide roller 41c, and the fourth guide roller 41d. In a case where the plurality of guide rollers 41 are capable of defining the rectangular inner region SP1, the plurality of guide rollers 41 are capable of guiding the workpiece W having a rectangular cross-section (for example, a square cross-section, a rectangular cross-section) in a stable manner. It is needless to say that the plurality of guide rollers 41 are also capable of guiding the workpiece W having any cross-sectional shape other than the rectangular one (for example, a circular cross-sectional shape, a letter C-shaped cross-sectional shape, a letter H-shaped cross-sectional shape, and the like).

### (Roller Mover 43)

In the example illustrated in FIG. 11, the laser-beam working machine 1B (more specifically, the second chuck 4) includes a roller mover 43, which moves the plurality of guide rollers 41. The roller mover 43 moves the plurality of guide rollers 41 in a direction not parallel to the first direction *DR1* (for example, a direction perpendicular to the first direction *DR1*) between the advanced positions in contact with the workpiece W and the retracted positions (see FIG. 12) that allow the end face 31e of the grip member 31 to move among the plurality of guide rollers 41.

As illustrated in FIG. 11, a direction from the first guide roller 41a toward the second guide roller 41b is defined as a third direction DR3, and a direction from the second guide roller 41b toward the first guide roller 41a is defined as a fourth direction DR4. The third direction DR 3 and the fourth direction DR4 are each perpendicular to the first direction *DR1,* for example.

In the example illustrated in FIG. 11, the roller mover 43 includes a first roller mover 43a (for example, an actuator or a motor), which moves the first guide roller 41a in the third direction DR3 (or the fourth direction DR4). In a case where the movable range of the first guide roller 41a in a direction parallel to the third direction DR3 is defined as a first range, the first roller mover 43a is preferably capable of fixing the position of the first guide roller 41a at any position within the first range.

In the example illustrated in FIG. 11, the roller mover 43 includes a second roller mover 43b (for example, an actuator or a motor), which moves the second guide roller 41b in the fourth direction DR4 (or the third direction DR3). In a case where the movable range of the second guide roller 41b in a direction parallel to the third direction DR3 is defined as a second range, the second roller mover 43b is preferably capable of fixing the position of the second guide roller 41b at any position within the second range.

The power source (for example, an actuator or a motor) with which the second roller mover 43b moves the second guide roller 41b may be identical to or different from the power source (for example, an actuator or a motor) with which the first roller mover 43a moves the first guide roller 41a.

As illustrated in FIG. 11, a direction from the third guide roller 41c toward the fourth guide roller 41d is defined as a fifth direction DR5, and a direction from the fourth guide roller 41d toward the third guide roller 41c is defined as a sixth direction DR6. The fifth direction DR5 and the sixth direction DR6 are each perpendicular to the first direction *DR1,* for example.

In the example illustrated in FIG. 11, the roller mover 43 includes a third roller mover 43c, which moves the third guide roller 41c in the fifth direction DR5 (or the sixth direction DR6). In a case where the movable range of the third guide roller 41c in a direction parallel to the fifth direction DR5 is defined as a third range, the third roller mover 43c is preferably capable of fixing the position of the third guide roller 41c at any position within the third range.

In the example illustrated in FIG. 11, the roller mover 43 includes a fourth roller mover 43d, which moves the fourth guide roller 41d to the sixth direction DR6 (or the fifth direction DR5). In a case where the movable range of the fourth guide roller 41d in the direction parallel to the fifth direction DR5 is defined as a fourth range, the roller mover 43 is preferably capable of fixing the position of the fourth guide roller 41d at any position within the fourth range.

The power source (for example, an actuator or a motor) with which the fourth roller mover 43d moves the fourth guide roller 41d may be identical to or different from the power source (for example, an actuator or a motor) with which the third roller mover 43c moves the third guide roller 41c.

### (Second Rotor 45 and Second Rotation Drive 46)

In the example illustrated in FIG. 12, the second chuck 4 includes a second rotor 45 and a second rotation drive 46 (for example, a second motor of a second servo motor or the like).

The second rotor 45 supports the plurality of guide rollers 41, a plurality of roller support members 42, which respectively support the plurality of guide rollers 41, and the roller mover 43, which moves the plurality of guide rollers 41. The second rotor 45 has an annular body. In the example illustrated in FIG. 10, the second rotor 45 includes a through hole 45h into which the grip member 31 of the first chuck 3 is inserted. The through hole 45h is a hole that allows the end face 31e of the grip member 31 of the first chuck 3 to pass through.

The second rotation drive 46 rotates the second rotor 45 about the first axis AT. The second rotation drive 46 rotates the second rotor 45, thereby rotating the plurality of guide rollers 41, the plurality of roller support members 42, the roller mover 43, and the second rotor 45 integrally about the first axis AT. As illustrated in FIG. 12, the second chuck 4 may include a power transmission member 47, such as a gear, for transmitting driving force of the second rotation drive 46 to the second rotor 45. In this case, the drive axis of the second rotation drive 46 does not have to be coaxial with the first axis AT.

### (Grip Member 31)

FIG. 13 is a cross-sectional view taken along the arrow F-F in FIG. 8. In the example illustrated in FIG. 13, the grip member 31 includes: a first grip member 31a to be in contact with the workpiece W; and a second grip member 31b to be in contact with the workpiece W. The second grip member 31b is provided on a side opposite to the first grip member 31a with respect to the workpiece W.

The first grip member 31a includes: a first gripper 32a, and a first gripper support body 33a, which supports the first gripper 32a. In addition, the second grip member 31b includes: a second gripper 32b; and a second gripper support body 33b, which supports the second gripper 32b.

As illustrated in FIG. 13, the grip member 31 may include: a third grip member 31c to be in contact with the workpiece W; and a fourth grip member 31d, which is provided on a side opposite to the third grip member 31c with respect to the workpiece, and which is to be in contact with the workpiece W. The third grip member 31c includes: a third gripper 32c; and a third gripper support body 33c, which supports the third gripper 32c. In addition, the fourth grip member 31d includes: a fourth gripper 32d; and a fourth gripper support body 33d, which supports the fourth gripper 32d. In the example illustrated in FIG. 13, the angle made by a direction from the third grip member 31c toward the fourth grip member 31d and a direction from the first grip member 31a toward the second grip member 31b is 90 degrees.

In the example illustrated in FIG. 14, the grip member 31 is rotatable about the first axis AT (see an arrow R2), in a state in which the grip member 31 is inserted on inner sides of the plurality of guide rollers 41, in other words, in a state in which the grip member 31 is partially arranged in an inner region SP, which is defined by the plurality of guide rollers 41 (see the inner region SP surrounded by a dashed line). In this case, in a state in which the grip member 31 is located in the vicinity of the laser head 20, the posture of the workpiece W (more specifically, the short workpiece WS) about the first axis AT is changeable.

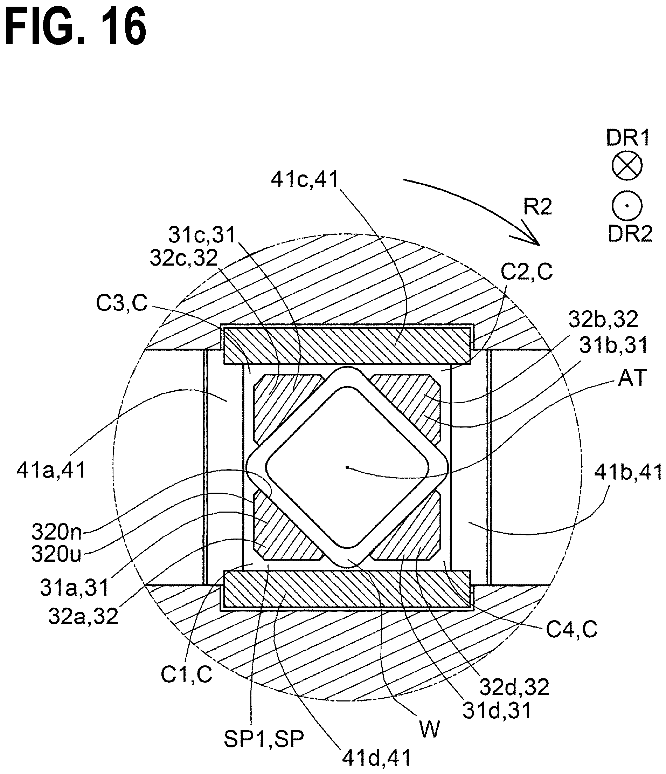

FIG. 15 is a cross-sectional view taken along the arrow G-G in FIG. 14. In the example illustrated in FIGs. 15 and 16, in the state in which the grip member 31 is inserted on the inner sides of the plurality of guide rollers 41, the plurality of guide rollers 41 are rotatable about the first axis AT together with the grip member 31 (see an arrow R2). In this case, in order to rotate the grip member 31 about the first axis AT, there is no need to additionally retract the plurality of guide rollers 41 respectively in directions away from the first axis AT.

In the example of FIG. 16, the grip member 31 includes a plurality of grippers 32. In addition, in the example illustrated in FIG. 16, the plurality of grippers 32 are respectively arrangeable in a plurality of corner portions C of the rectangular inner region SP1, which is defined by the plurality of guide rollers 41. In this case, the plurality of guide rollers 41 are respectively retracted by small distances in the directions away from the first axis AT, and then the plurality of grippers 32 are respectively insertable on the inner sides of the plurality of guide rollers 41.

In the example illustrated in FIG. 16, the first gripper 32a is provided in a first corner portion C1 of the above-described rectangular inner region SP1, the second gripper 32b is provided in a second corner portion C2 of the above-described rectangular inner region SP1, the third gripper 32c is provided in a third corner portion C3 of the above-described rectangular inner region SP1, and the fourth gripper 32d is provided in a fourth corner portion C4 of the above-described rectangular inner region SP1.

When viewed in a direction along the first direction *DR1* (or the second direction *DR2*), an outer side surface 320u of each of the plurality of grippers 32 preferably has a shape complementary to the corner portion C having a right angle. In this case, each of the plurality of grippers 32 can be suitably provided in the corner portion C having a right angle in the rectangular inner region SP1. In addition, an inner side surface 320n of each of the plurality of grippers 32 is preferably a planar surface. In this case, the workpiece W is held by the plurality of grippers 32 in a stable manner. As illustrated in FIG. 16, when viewed in a direction along the second direction DR2, each of the plurality of grippers 32 may have a substantially right-angled triangular shape.

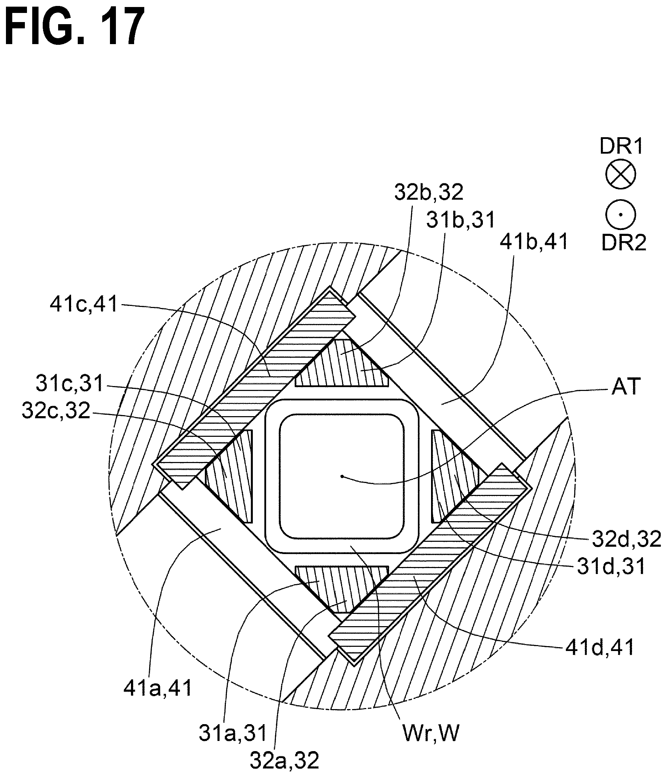

In the example illustrated in FIG. 17, in a state in which the grip member 31 is inserted on the inner sides of the plurality of guide rollers 41, the grip member 31 is capable of releasing holding the workpiece W (for example, holding the remaining workpiece Wr, which is produced by the laser-beam machining of the workpiece W). More specifically, in a state in which the grip members 31 is provided on the inner sides of the plurality of guide rollers 41, the plurality of grippers 32 are respectively retractable in the directions away from the first axis AT (more specifically, in directions toward the plurality of guide rollers 41 from the first axis AT).

In the example illustrated in FIG. 18, since the end face 31e of the grip member 31 is located on the first direction *DR1* side relative to the plurality of guide rollers 41, it is unlikely that the remaining workpiece Wr drops onto the second direction *DR2* side relative to the plurality of guide rollers 41. In addition, the remaining workpiece Wr drops onto the first direction *DR1* side relative to the plurality of guide rollers 41 in accordance with the gravity acting on the remaining workpiece Wr. Therefore, a pusher for pushing out the remaining workpiece Wr from the grip member 31 to the first direction *DR1* side can be omitted. By omitting the pusher and the operations of the pusher, the time needed for unloading the remaining workpiece Wr can be shortened. It is to be noted that in the example illustrated in FIG. 18, the remaining workpiece Wr, which is released from the grip member 31, is collected by a remaining workpiece collector 77.

### (Gripper Mover 34)

In the example illustrated in FIG. 13, the laser-beam working machine 1B (more specifically, the first chuck 3) includes a gripper mover 34, which moves the plurality of grippers 32. The gripper mover 34 moves the plurality of grippers 32 in a direction not parallel to the first direction *DR1* (for example, a direction perpendicular to the first direction *DR1*) between holding positions in contact with the workpiece W and release positions (if necessary, see FIG. 17) spaced apart from the workpiece W (more specifically, the remaining workpiece Wr).

In the example illustrated in FIG. 13, the gripper mover 34 includes a first gripper mover 34a (for example, an actuator or a motor), which moves the first gripper 32a in a direction approaching the second gripper 32b (or a direction away from the second gripper 32b). The gripper mover 34 also includes a second gripper mover 34b (for example, an actuator or a motor), which moves the second gripper 32b in a direction approaching the first gripper 32a (or a direction away from the first gripper 32a). The power source (for example, an actuator or a motor) with which the second gripper mover 34b moves the second gripper 32b may be identical to or different from the power source (for example, an actuator or a motor) with which the first gripper mover 34a moves the first gripper 32a.

In the example illustrated in FIG. 13, the gripper mover 34 includes a third gripper mover 34c (for example, an actuator or a motor), which moves the third gripper 32c in a direction approaching the fourth gripper 32d (or a direction away from the fourth gripper 32d). The gripper mover 34 also includes a fourth gripper mover 34d (for example, an actuator or a motor), which moves the fourth gripper 32d in a direction approaching the third gripper 32c (or a direction away from the third gripper 32c). The power source (for example, an actuator or a motor) with which the fourth gripper mover 34d moves the fourth gripper 32d may be identical to or different from the power source (for example, an actuator or a motor) with which the third gripper mover 34c moves the third gripper 32c.

### (First Rotor 35 and First Rotation Drive 36)

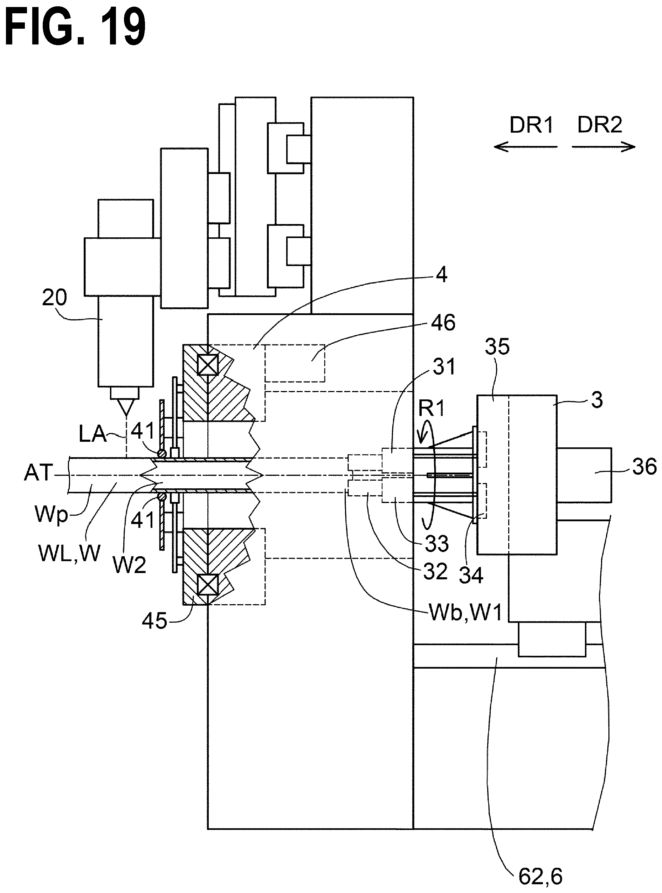

In the example illustrated in FIG. 19, the first chuck 3 includes: a first rotor 35; and a first rotation drive 36 (for example, a first motor such as a first servo motor). The first rotor 35 supports the plurality of grippers 32, the plurality of gripper support bodies 33, and the gripper mover 34. In addition, the first rotation drive 36 rotates the first rotor 35 about the first axis AT. The first rotation drive 36 rotates the first rotor 35, thereby rotating the plurality of grippers 32, the plurality of gripper support bodies 33, and the gripper mover 34 integrally about the first axis AT. In the example illustrated in FIG. 19, the drive axis of the first rotation drive 36 is coaxial with the first axis AT.

### (Two Rotation Drives)

In the example of FIG. 19, the laser-beam working machine 1B includes two rotation drives (36, 46). In this case, the long workpiece WL, which is supported by both the first chuck 3 and the second chuck 4, is made rotatable about the first axis AT in a stable manner.

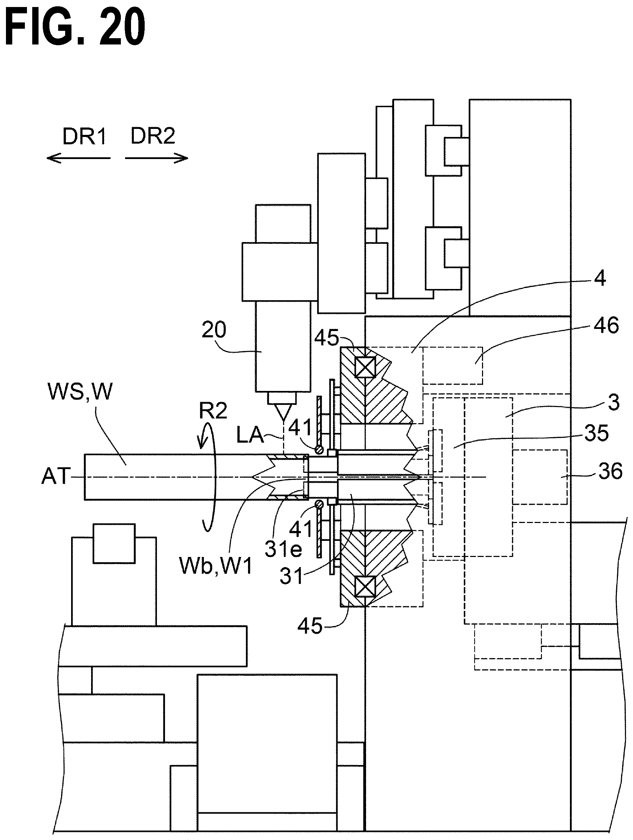

Further, in a case where the laser-beam working machine 1B includes two rotation drives (36, 46), the plurality of guide rollers 41 and the grip member 31 are made rotatable about the first axis AT in a smooth manner, in the state in which the grip member 31 is inserted on the inner sides of the plurality of guide rollers 41 (see FIG. 20). In the example illustrated in FIG. 20, the first rotation drive 36 is capable of rotating the grip member 31 about the first axis AT, in the state in which the grip member 31 is inserted on the inner sides of the plurality of guide rollers 41, and the second rotation drive 46 is capable of rotating the plurality of guide rollers 41 about the first axis AT, in the state in which the grip member 31 is inserted on the inner sides of the plurality of guide rollers 41.

Alternatively, only one of the first rotor 35 and the second rotor 45 may be driven to actively rotate about the first axis AT by the rotation drive, and the other one of the first rotor 35 and the second rotor 45 may passively rotate about the first axis AT.

### (Mover 6)

In the example illustrated in FIG. 10, the mover 6 is capable of moving the first chuck 3 in the first direction *DR1,* and is capable of moving the first chuck 3 in the second direction *DR2.* The mover 6 includes: a drive 61 (more specifically, a motor such as a servo motor), which moves the first chuck 3; and a guide member 62 (for example, a guide rail), which guides the movement of the first chuck 3. The mover 6 may include a power transmission member that converts the power of the drive 61 into the movement of the first chuck 3. The mover 6 may also convert the rotational force of the drive 61 into the movement of the first chuck 3 in either the first direction *DR1* or the second direction *DR2* via a rack and pinion.

### (Loader 71, First Support Member 72, Unloader 75, Second Support Member 76, and Remaining Workpiece Collector 77)

In the example of FIG. 8, the laser-beam working machine 1B includes loaders 71. The loader 71 loads the workpiece W into the laser-beam working machine 1B. More specifically, the loader 71 loads the workpiece W into between the first chuck 3 and the second chuck 4. The workpiece W that has been loaded is held by the grip member 31 of the first chuck 3.

In the example of FIG. 8, the laser-beam working machine 1B includes at least one first support member 72, which supports the workpiece W separately from the first chuck 3 and the second chuck 4. The first support member 72 is provided on the second direction *DR2* side relative to the second chuck 4.

In the example of FIG. 8, the first support members 72 are provided between the first chuck 3 and the second chuck 4. The first support member 72 is configured to support the lower surface of the workpiece W, when the workpiece W moves in the first direction *DR1* (or when the workpiece W is machined by the laser beam irradiated from the laser head 20). In this case, deflection of the workpiece W (more specifically, the long workpiece WL) is eliminated or minimized, while the workpiece W is moving or while the workpiece W is being machined. The first support member 72 may be provided on the loader 71, or may be provided on the first base 91 of the laser-beam working machine 1B.

The laser-beam working machine 1B may include a support member mover 73, which moves the first support member 72 between an advanced position at which the support member mover 73 is capable of supporting the workpiece W and a retracted position outside the moving path of the first chuck 3. In this case, the support member mover 73 moves the first support member 72 to the retracted position, and thus interference between the first chuck 3, which moves in the first direction *DR1,* and the first support member 72 is prevented.

In the example of FIG. 8, the laser-beam working machine 1B includes unloaders 75. The unloader 75 unloads the machined product produced by the laser-beam machining from a workpiece machining region MR of the laser-beam working machine 1B to the outside of the workpiece machining region MR. More specifically, the unloader 75 receives the workpiece W that has been machined by the laser beam irradiated from the laser head 20, and then unloads the workpiece W from the workpiece machining region MR to the outside of the workpiece machining region.

In the example of FIG. 8, the laser-beam working machine 1B includes at least one second support member 76, which supports the workpiece W separately from the first chuck 3 and the second chuck 4. The second support member 76 is provided on the first direction *DR1* side relative to the second chuck 4.

The second support member 76 is configured to support the lower surface of the workpiece W, when the workpiece W moves in the first direction *DR1* (or when the workpiece W is machined with a laser beam irradiated from the laser head 20). In this case, the deflection of the workpiece W (more specifically, the long workpiece WL) is eliminated or minimized, while the workpiece W is moving or while the workpiece W is being machined. The second support member 76 may be provided on the unloader 75.

In the example of FIG. 8, the laser-beam working machine 1B includes a remaining workpiece collector 77. The remaining workpiece collector 77 collects the remaining workpiece Wr, which has been produced by machining of the workpiece W. In the example of FIG. 8, the remaining workpiece collector 77 is provided directly below the workpiece machining region MR. The remaining workpiece collector 77 may include: a carriage 78; and a remaining workpiece container 79, which is attached to the carriage 78.

### (First Chuck 3)

In the example illustrated in FIG. 10, the first chuck 3 includes: the grip member 31; the first rotor 35, which supports the grip member 31; a rotor support member 37, which supports the first rotor 35 to be rotatable about the first axis AT; the first rotation drive 36, which rotates the first rotor 35 about the first axis AT; and a first chuck base 38, which supports the rotor support member 37. The first rotation drive 36 is attached to the rotor support member 37. The first chuck base 38 is slidably movable in either the first direction *DR1* or the second direction *DR2* along the guide member 62, which is provided on the first base 91 of the laser-beam working machine 1B.

### (Second Chuck 4)

In the example illustrated in FIG. 10, the second chuck 4 includes: the plurality of guide rollers 41; the second rotor 45, which supports the plurality of guide rollers 41 via the roller support members 42; a second rotor support member 48, which supports the second rotor 45 to be rotatable about the first axis AT; and the second rotation drive 46, which rotates the second rotor 45 about the first axis AT. The second rotation drive 46 is attached to the second rotor support member 48.

In the example of FIG. 10, the second rotor support member 48 has an annular body. In the example illustrated in FIG. 10, the second rotor support member 48 includes a through hole 48h, into which the grip member 31 of the first chuck 3 is inserted. In the example illustrated in FIG. 10, the second rotor support member 48 prohibits the first chuck base 38 of the first chuck 3 from moving in the first direction *DR1* beyond the second rotor support member 48. In other words, the first chuck base 38 of the first chuck 3 is not capable of passing through the through hole 48h of the second rotor support member 48.

In the example of FIG. 10, the second chuck 4 is fixed onto the second base 92 of the laser-beam working machine 1B. Alternatively, the second chuck 4 may be movable relatively to the second base 92 or the first base 91 in either the first direction *DR1* or the second direction *DR2.*

### (Laser-Beam Irradiation Apparatus 2)

In the example illustrated in FIG. 10, the laser-beam working machine 1B includes a laser-beam irradiation apparatus 2, and the laser-beam irradiation apparatus 2 includes: the laser head 20, the laser head mover 22, which moves the laser head 20; and a third base 24, which supports the laser head 20 via the laser head mover 22.

The laser head mover 22 moves the laser head 20. In the example illustrated in FIG. 10, the laser head mover 22 includes: a vertical drive 22a, which moves the laser head 20 along a vertical direction; and a horizontal drive 22b, which moves the laser head 20 along a horizontal direction. The laser head mover 22 may include a tilt device for tilting the laser head 20 about a horizontal axis.

In the example of FIG. 10, the laser head mover 22 is a device for moving the laser head 20 two-dimensionally on YZ plane. Alternatively, the laser head mover 22 may be a device for moving the laser head 20 three-dimensionally. In other words, the laser head mover 22 may be capable of moving the laser head 20 in X direction, capable of moving the laser head 20 in Y direction, and capable of moving the laser head 20 in Z direction. It is to be noted that Z direction is a direction parallel to the vertical direction, X direction is a direction parallel to the first direction *DR1,* and Y direction is a direction perpendicular to both X direction and Z direction.

In the example of FIG. 10, the third base 24 is fixed onto the second base 92. Alternatively, the third base 24 may be directly fixed onto the first base 91 of the laser-beam working machine 1B.

### (Controller 8)

In the example of FIG. 21, the laser-beam working machine 1B includes the controller 8. The controller 8 may include one computer, or may include a plurality of computers.

FIG. 22 is a block diagram illustrating a hardware configuration of the controller 8, as an example. As illustrated in FIG. 22, the controller 8 includes: a processor 80; a memory 82; a communication circuit 84; and an input device 86 (for example, a display 862 with a touch panel (see FIG. 21)). The processor 80, the memory 82, the communication circuit 84, and the input device 86 are connected with one another via a bus 88. Data necessary for the laser-beam machining (for example, shape data of the workpiece W, machining position data of the workpiece W, and the like) may be input into the controller 8 via the input device 86, or may be input from another computer into the controller 8 via the communication circuit 84. It is to be noted that the input device 86 is not limited to the display 862 with the touch panel. For example, the controller 8 may include: the input device 86 such as a button, a switch, a lever, a pointing device, or a keyboard; and a display for displaying data that has been input into the input device 86 or other information.

The processor 80 executes a machining program 822, which is stored in the memory 82, based on the data that has been input into the controller 8, and generates a control signal. In addition, the communication circuit 84 transmits such a control signal to devices to be controlled (more specifically, the mover 6, the first chuck 3, the second chuck 4, the laser head 20, the laser head mover 22, and the like). In this manner, the processor 80 executes the machining program 822, and then the controller 8 is capable of controlling the mover 6, the first chuck 3, the second chuck 4, the laser head 20, and the laser head mover 22.

The machining program 822 may include a first program for performing a first moving mode to be described below, may include a second program for performing a second moving mode to be described below, may include a third program for performing a first rotating mode to be described below, may include a fourth program for performing a second rotating mode to be described below, may include a fifth program for performing a long workpiece machining mode to be described below, may include a sixth program for performing a short workpiece machining mode to be described below, and may include a seventh program for performing a remaining workpiece discharging mode to be described below.

In the example illustrated in FIG. 21, the controller 8 controls the mover 6, the first rotation drive 36 of the first chuck 3, the gripper mover 34 of the first chuck 3, the second rotation drive 46 of the second chuck 4, the roller mover 43 of the second chuck 4, the laser head 20, and the laser head mover 22.

More specifically, the controller 8 transmits a first control signal S1 to the mover 6, and the mover 6, which receives the first control signal S1, moves the first chuck 3 in either the first direction *DR1* or the second direction *DR2.* The controller 8 transmits a second control signal S2 to the first rotation drive 36, and the first rotation drive 36, which receives the second control signal S2, rotates the grip member 31 (more specifically, the first rotor 35, which supports the grip member 31) about the first axis AT. The controller 8 transmits a third control signal S3 to the gripper mover 34, and the gripper mover 34, which receives the third control signal S3, moves the plurality of grippers 32 respectively (more specifically, the plurality of gripper support bodies 33, which respectively support the plurality of grippers 32) in the directions away from the first axis AT or directions approaching the first axis AT. The controller 8 transmits a fourth control signal S4 to the second rotation drive 46, and the second rotation drive 46, which receives the fourth control signal S4, rotates the plurality of guide rollers 41 (more specifically, the second rotor 45, which supports the plurality of guide rollers 41) about the first axis AT. The controller 8 transmits a fifth control signal S5 to the roller mover 43, and the roller mover 43, which receives the fifth control signal S5, moves the plurality of guide rollers 41 respectively (more specifically, the plurality of roller support members 42, which respectively support the plurality of guide rollers 41) in either the directions away from the first axis AT or directions approaching the first axis AT. The controller 8 transmits a sixth control signal S6 to the laser head 20, and the laser head 20, which receives the sixth control signal S6, irradiates the workpiece W with a laser beam. The controller 8 also transmits a seventh control signal S7 to the laser head mover 22, and the laser head mover 22, which receives the seventh control signal S7, moves the laser head 20.

### (First Moving Mode and Second Moving Mode)

By controlling the mover 6, the first rotation drive 36, and the second rotation drive 46, the controller 8 is capable of performing the first moving mode. The first moving mode is, as illustrated in FIG. 23, a mode for moving the first chuck 3 in either the first direction *DR1* or the second direction *DR2,* in a state in which the rotation phases of the plurality of grippers 32 about the first axis AT are respectively coincident with the rotation phases of the plurality of guide rollers 41 about the first axis AT. More specifically, the first moving mode is a mode for moving the first chuck 3 in either the first direction *DR1* or the second direction *DR2,* in a state in which a first rotation angle α indicating the rotation phase of the first gripper 32a about the first axis AT is coincident with any one of the plurality of rotation angles (β1, β2, β3, β4) of the plurality of guide rollers 41 about the first axis AT. In the example illustrated in FIG. 23, the first rotation angle α is coincident with the rotation angle β1 of the first guide roller 41a.

As illustrated in FIG. 8, the first moving mode is used, when the first chuck 3 moves the long workpiece WL in either the first direction *DR1* or the second direction *DR2.* The controller 8 performs the first moving mode, and thus a laser-beam irradiated position of the long workpiece WL in the direction along the first direction *DR1* is changed.

By controlling the mover 6, the first rotation drive 36, and the second rotation drive 46, the controller 8 is capable of performing the second moving mode. The second moving mode is, as illustrated in FIG. 24, a mode for moving the first chuck 3 in either the first direction *DR1* or the second direction *DR2,* in a state in which the rotation phases of the plurality of grippers 32 about the first axis AT and the rotation phases of the plurality of guide rollers 41 about the first axis AT are respectively shifted from each other by 45 degrees. More specifically, the second moving mode is a mode for moving the first chuck 3 in either the first direction *DR1* or the second direction, in a state in which the first rotation angle α indicating the rotation phase of the first gripper 32a about the first axis AT is shifted by 45 degrees from any one of the plurality of rotation angles (β1, β2, β3, β4) of the plurality of guide rollers 41 about the first axis AT. In the example illustrated in FIG. 24, the first rotation angle α is shifted by 45 degrees from the rotation angle β1 of the first guide roller 41a, and is shifted by 45 degrees from the rotation angle β4 of the third guide roller 41c.

Shifting the first rotation angle α by 45 degrees from any one of the plurality of rotation angles (β1, β2, β3, β4) may be conducted by the first rotation drive 36, which receives the control signal from the controller 8, rotating the plurality of grippers 32 by 45 degrees about the first axis AT, or may be conducted by the second rotation drive 46, which receives the control signal from the controller 8, rotating the plurality of guide rollers 41 by 45 degrees about the first axis AT. It is to be noted that some margin of error is allowed herein. For example, herein, "45 degrees" includes exactly 45 degrees and approximately 45 degrees. It is to be noted that it is needless to say that instead of rotating the plurality of grippers 32 (or the plurality of guide rollers 41) about the first axis AT by "45 degrees", the plurality of grippers 32 (or the plurality of guide rollers 41) may be rotated by "135 degrees", "225 degrees", or "315 degrees" about the first axis AT.

As illustrated in FIG. 25, the second moving mode is used, when the grip member 31 of the first chuck 3 is inserted into the inner sides of the plurality of guide rollers 41 in the second chuck 4 (see an arrow AR1). In addition, the second moving mode is used, when the short workpiece WS is moved in either the first direction *DR1* or the second direction *DR2.* The controller 8 performs the second moving mode, and thus the laser-beam irradiated position of the short workpiece WS in the direction along the first direction *DR1* is changed.

### (Change of State of Grip Member 31)

In the example illustrated in FIG. 10, by controlling the mover 6 (more specifically, by controlling the mover 6 and the roller mover 43), the controller 8 is capable of changing the state of the grip member 31 of the first chuck 3 from a first state in which the entirety of the grip member 31 is provided outside the second chuck 4 to a second state in which the grip member 31 is inserted on the inner sides of the plurality of guide rollers 41.

The state of the grip member 31 is changed from the first state to the second state in the following procedure, for example. Firstly, the controller 8 transmits the fifth control signal S5 to the roller mover 43, and the roller mover 43, which receives the fifth control signal S5, retracts the plurality of guide rollers 41 in the directions away from the first axis AT. Secondly, the controller 8 transmits the first control signal S1 to the mover 6, and the mover 6, which receives the first control signal S1, moves the first chuck 3 in the first direction *DR1,* so that the grip member 31 of the first chuck 3 is inserted on the inner sides of the plurality of guide rollers 41. The movement of the first chuck 3 in the first direction *DR1* may be conducted by the controller 8 performing the above-described second moving mode. In this case, in a state in which the rotation phases of the plurality of grippers 32 about the first axis AT respectively are shifted by 45 degrees from the rotation phases of the plurality of guide rollers 41 about the first axis AT, the grip member 31 is inserted on the inner sides of the plurality of guide rollers 41.

### (First Rotating Mode)

In the example illustrated in FIG. 19, by controlling the first rotation drive 36 and the second rotation drive 46 (in other words, by transmitting the second control signal S2 to the first rotation drive 36 and transmitting the fourth control signal S4 to the second rotation drive 46), the controller 8 is capable of performing the first rotating mode. The first rotating mode is a mode for synchronously rotating the grip member 31 in the first state (in other words, the grip member 31, which is provided outside the second chuck 4) and the plurality of guide rollers 41 about the first axis AT.

As illustrated in FIG. 19, the first rotating mode is used for rotating the long workpiece WL about the first axis AT using the first chuck 3 and the second chuck 4. More specifically, the first rotating mode is used for changing the laser-beam irradiated position of the long workpiece WL in a rotational direction about the first axis AT.

The controller 8 may simultaneously perform the first rotating mode and the first moving mode that have been described above. In this case, the laser-beam irradiated position of the long workpiece WL in the direction along the first direction *DR1* and the laser-beam irradiated position of the long workpiece WL in the rotational direction about the first axis AT are simultaneously changed.

As illustrated in FIG. 19, the first rotating mode is performed, in a state in which a first part W1 of the long workpiece WL (more specifically, a base end portion Wb of the long workpiece WL) is held by the grip member 31 of the first chuck 3 and a second part W2 of the long workpiece WL (more specifically, a tip end part or a central part of the long workpiece WL) is supported by the plurality of guide rollers 41 of the second chuck 4. Therefore, in the first rotating mode, the long workpiece WL is rotated about the first axis AT in a stable manner, with twisting of the long workpiece WL eliminated or minimized.

### (Second Rotating Mode)

In the example illustrated in FIG. 20, by controlling the first rotation drive 36 and the second rotation drive 46 (in other words, by transmitting the second control signal S2 to the first rotation drive 36 and transmitting the fourth control signal S4 to the second rotation drive 46), the controller 8 is capable of performing the second rotating mode. The second rotating mode is a mode for rotating the grip member 31 in the second state (in other words, the grip member 31, which is inserted on the inner sides of the plurality of guide rollers 41) about the first axis AT.

As illustrated in FIGs. 15 and 16, the second rotating mode is preferably a mode for synchronously rotating the grip member 31 and the plurality of guide rollers 41 about the first axis AT, in the state in which the grip member 31 is inserted on the inner sides of the plurality of guide rollers 41. However, in a case where the plurality of guide rollers 41 are sufficiently retracted respectively in the directions away from the first axis AT, only the grip member 31 may be rotated about the first axis AT, in a state in which the plurality of guide rollers 41 are not rotated about the first axis AT in the second rotating mode.

As indicated by an arrow R2 in FIG. 20, the second rotating mode is used for rotating the short workpiece WS about the first axis AT using the first chuck 3. More specifically, the second rotating mode is used for changing the laser-beam irradiated position of the short workpiece WS in the rotational direction about the first axis AT.

The controller 8 may simultaneously perform the second rotating mode and the second moving mode that have been described above. In this case, the laser-beam irradiated position of the short workpiece WS in the direction along the first direction *DR1* and the laser-beam irradiated position of the short workpiece WS in the rotational direction about the first axis AT are simultaneously changed.

In the example illustrated in FIG. 20, the second rotating mode is performed, in a state in which the first part W1 of the short workpiece WS (more specifically, the base end portion Wb of the short workpiece WS) is held by the grip member 31 of the first chuck 3 and the plurality of guide rollers 41 are spaced apart from the short workpiece WS.

### (Long Workpiece Machining Mode)

In the example illustrated in FIG. 19, by controlling the laser head 20 (in other words, by transmitting the sixth control signal S6 to the laser head 20), the controller 8 is capable of performing a long workpiece machining mode. The long workpiece machining mode is a mode for irradiating the laser beam from the laser head 20 toward the long workpiece WL, which is supported by the grip member 31 in the first state (in other words, the grip member 31, which is provided outside the second chuck 4) and the plurality of guide rollers 41.

As illustrated in FIG. 19, the long workpiece machining mode is performed, in a state in which the long workpiece WL is supported by the grip member 31 of the first chuck 3 and the plurality of guide rollers 41 of the second chuck 4. Therefore, in the long workpiece machining mode, the long workpiece WL is machined in a stable manner, with the deflection of the long workpiece WL eliminated or minimized.

In addition, the controller 8 may simultaneously perform the long workpiece machining mode and the first rotating mode and/or the first moving mode. In this case, during machining of the long workpiece WL, the laser-beam irradiated position of the long workpiece WL in the direction along the first direction *DR1* and/or the laser-beam irradiated position of the long workpiece WL in the rotational direction about the first axis AT are changed.

### (Short Workpiece Machining Mode)

In the example illustrated in FIG. 20, by controlling the laser head 20 (in other words, by transmitting the sixth control signal S6 to the laser head 20), the controller 8 is capable of performing a short workpiece machining mode. The short workpiece machining mode is a mode for irradiating the laser beam from the laser head 20 toward the short workpiece WS, which is held by the grip member 31 in the second state (in other words, the grip member 31, which is inserted on the inner sides of the plurality of guide rollers 41).

The controller 8 may simultaneously perform the short workpiece machining mode and the second rotating mode and/or the second moving mode. In this case, during machining of the short workpiece WS, the laser-beam irradiated position of the short workpiece WS in the direction along the first direction *DR1* and/or the laser-beam irradiated position of the short workpiece WS in the rotational direction about the first axis AT are changed.

As illustrated in FIG. 20, the short workpiece machining mode is performed, in the state in which the grip member 31 of the first chuck 3 is inserted on the inner sides of the plurality of guide rollers 41 of the second chuck 4. Therefore, the length of the remaining workpiece produced by machining of the short workpiece WS can be shortened.

### (Remaining Workpiece Unloading Mode)

In the example illustrated in FIG. 18, by controlling the gripper mover 34 (in other words, by transmitting the third control signal S3 to the gripper mover 34), the controller 8 is capable of performing a remaining workpiece unloading mode. The remaining workpiece unloading mode is a mode for unloading the remaining workpiece Wr from the grip member 31 in the second state (in other words, the grip member 31, which is inserted on the inner sides of the plurality of guide rollers 41). In the remaining workpiece unloading mode, the controller 8 transmits the third control signal S3 to the gripper mover 34, and the gripper mover 34, which receives the third control signal S3, moves the plurality of grippers 32 respectively in the directions away from the first axis AT. In this manner, holding of the remaining workpiece Wr by the plurality of grippers 32 is released, and the remaining workpiece Wr is unloaded from the grip member 31.

When the remaining workpiece Wr is unloaded from the grip member 31, which is inserted on the inner sides of the plurality of guide rollers 41, the remaining workpiece Wr can be dropped on the first direction *DR1* side relative to the plurality of guide rollers 41 with certainty.

### (Workpiece W)

In the second embodiment, the workpiece W (see FIG. 19) is, for example, a pipe Wp, which extends in the first direction *DR1.* In addition, the short workpiece WS (see FIG. 20) is a short pipe that is produced by the laser-beam machining of the pipe Wp and that can be supported only by the grip member 31. The cross-sectional shape of the pipe Wp in a direction perpendicular to the first direction *DR1* may have a rectangular, circular, or triangular shape. Further, the workpiece W may be a workpiece other than the pipe. For example, the workpiece W may be a long workpiece having a letter C-shaped cross-section, a long workpiece having a letter H-shaped cross-section, or a long workpiece having a letter L-shaped cross-section.

### (Laser-Beam Machining Method)

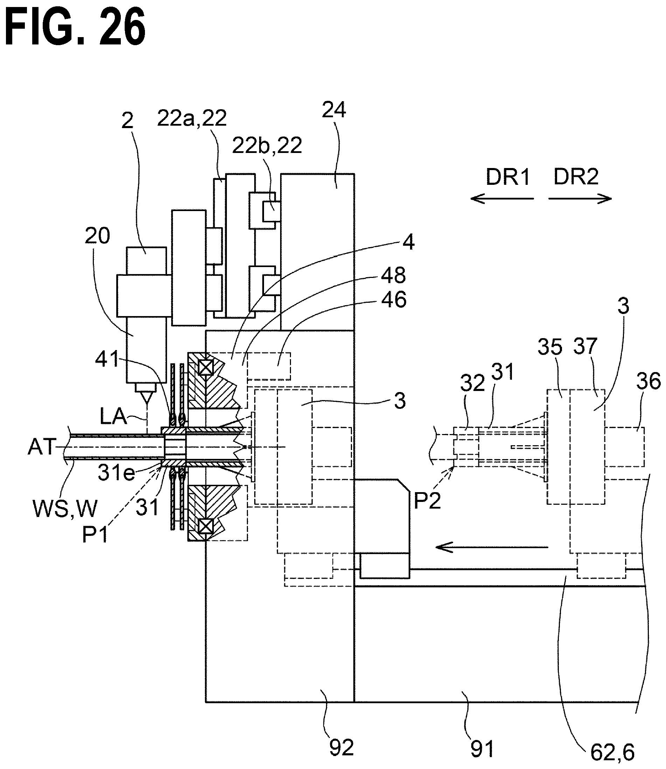

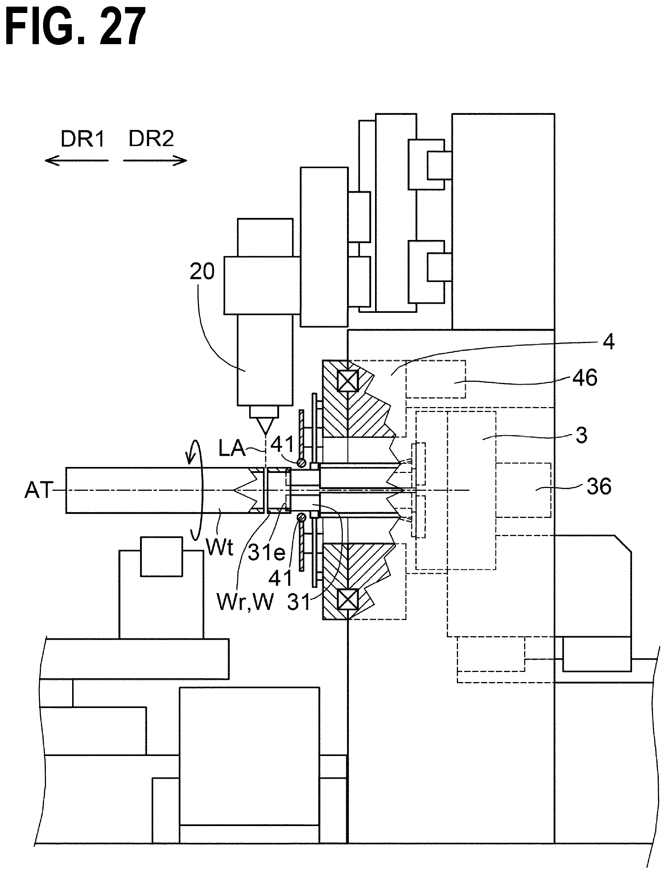

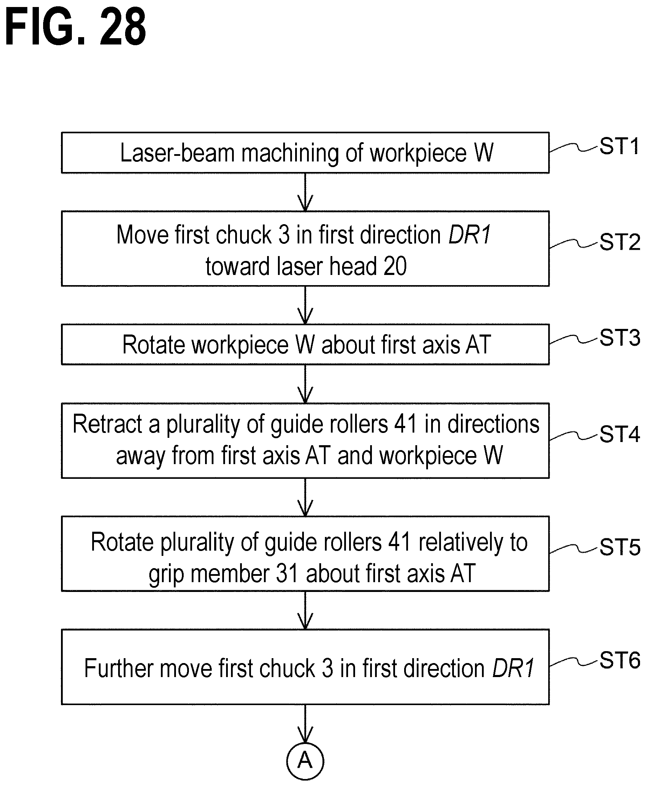

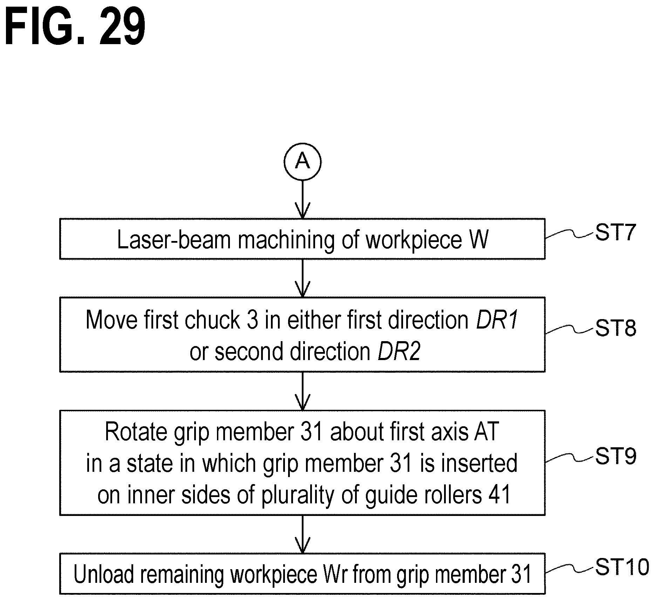

By referring to FIGs. 1 to 29, a laser-beam machining method according to an embodiment will be described. FIG. 26 schematically illustrates one processing step of the laser-beam machining method according to an embodiment. FIG. 27 schematically illustrates another processing step of the laser-beam machining method according to an embodiment. FIGs. 28 and 29 are flowcharts of the laser-beam machining method according to an embodiment, as an example.

The laser-beam working machine 1 used in the laser-beam machining method according to an embodiment may be the laser-beam working machine 1A according to the first embodiment, the laser-beam working machine 1B according to the second embodiment, or another laser-beam working machine. Since each component element of the laser-beam working machine 1 has been described in the first embodiment or the second embodiment, the repeated description of each configuration of the laser-beam working machine 1 will be omitted.

In a first step ST1, the workpiece W is machined by irradiating the workpiece W with a laser beam from the laser head 20. The first step ST1 is a first machining step.

As illustrated in FIGs. 1 and 9, the first machining step (first step ST1) is performed, in a state in which the first part W1 of the workpiece W (more specifically, the base end portion Wb of the workpiece W) is held by the grip member 31 of the first chuck 3 and the second part W2 of the workpiece W is interposed by the plurality of guide rollers 41 of the second chuck 4 located on the first direction *DR1* side relative to the first chuck 3.

In the example illustrated in FIGs. 1 and 9, the workpiece W (more specifically, the long workpiece WL) is supported by the grip members 31 of the first chuck 3 and the plurality of guide rollers 41 of the second chuck 4. Thus, in the first machining step, the workpiece W is machined in a stable manner, with the deflection of the workpiece W eliminated or minimized. It is to be noted that as illustrated in FIG. 8, in the first machining step, a third part W3 of the workpiece W may be additionally supported by the first support member 72, which is provided between the first chuck 3 and the second chuck 4.

In a second step ST2, the workpiece W is moved relatively to the laser head 20 and the plurality of guide rollers 41. The second step ST2 is a first moving step.

The first moving step (second step ST2) is performed by moving the first chuck 3, which holds the workpiece W, in the first direction *DR1* toward the laser head 20.

In the example illustrated in FIGs. 1 and 9, the workpiece W (more specifically, the long workpiece WL) is supported by the grip members 31 of the first chuck 3 and the plurality of guide rollers 41 of the second chuck 4. Thus, in the first moving step, the workpiece W can be moved in the first direction *DR1* in a stable manner. It is to be noted that as illustrated in FIG. 8, the first moving step may be performed, in a state in which the third part W3 of the workpiece W is additionally supported by the first support member 72, which is provided between the first chuck 3 and the second chuck 4.

As illustrated in FIGs. 1 and 9, the first machining step (more specifically, irradiating the workpiece W with the laser beam LA from the laser head 20) and the first moving step (more specifically, moving the first chuck 3 together with the workpiece W in the first direction *DR1*) may be performed simultaneously, sequentially, or alternately. In addition, in the first moving step, moving the first chuck 3, which holds the workpiece W, in the first direction *DR1* toward the laser head 20, and moving the first chuck 3, which holds the workpiece W, in the second direction *DR2* away from the laser head 20 may be alternately performed.

In a third step ST3, the workpiece W is rotated about the first axis AT, which is parallel to the first direction *DR1.* The third step ST3 is a first rotating step.

As illustrated in FIG. 9, the first rotating step (third step ST3) includes synchronously rotating the grip member 31, which holds the workpiece W, and the plurality of guide rollers 41 about the first axis AT (see an arrow R1). In addition, the first rotating step is performed, in a state in which the first part W1 of the workpiece W is held by the grip member 31 of the first chuck 3 and the second part W2 of the workpiece W is supported by the plurality of guide rollers 41 of the second chuck 4. Thus, in the first rotating step, the workpiece W (more specifically, the long workpiece WL) can be rotated about the first axis AT in a stable manner.

The first machining step (more specifically, irradiating the workpiece W with the laser beam LA from the laser head 20) and the first rotating step (more specifically, rotating the workpiece W about the first axis AT) may be performed simultaneously, sequentially, or alternately. Further, the first moving step (more specifically, moving the first chuck 3 together with the workpiece W in the first direction *DR1*) and the first rotating step (more specifically, rotating the workpiece W about the first axis AT) may be performed simultaneously, sequentially, or alternately.

By performing the first machining step, the first moving step, and the first rotating step, the length of the workpiece W, which is held by the grip member 31 of the first chuck 3, is shortened, and the workpiece W become the short workpiece WS. In the laser-beam machining method according to an embodiment, by performing of a fourth step ST4 to a sixth step ST6 to be described below, the short workpiece WS, which is held by the grip member 31, is moved to approach the laser head 20.

In the fourth step ST4, the plurality of guide rollers 41 are retracted respectively in the directions away from the first axis AT and the workpiece W. The fourth step ST4 is a retracting step. The retracting step (fourth step ST4) is performed by the roller mover 43 moving the plurality of guide rollers 41 respectively in the directions away from the first axis AT.

As illustrated in FIGs. 23 and 24, in the fifth step ST5, the plurality of guide rollers 41 are rotated relatively to the grip member 31 about the first axis AT. The fifth step ST5 is a relatively rotating step. The relatively rotating step includes respectively aligning the rotation phases of the plurality of grippers 32 about the first axis AT with a plurality of corner portions C of the rectangular inner region SP1, which is defined by the plurality of guide rollers 41. More specifically, in a case where *N* is defined as any integer equal to or greater than "0", the relatively rotating step includes rotating the plurality of guide rollers 41 relatively to the grip member 31 about the first axis AT by (45 + *N* × 90) degrees.

The relatively rotating step (fifth step ST5) may be performed by the first rotation drive 36 rotating the grip member 31 about the first axis AT, or may be performed by the second rotation drive 46 rotating the plurality of guide rollers 41 about the first axis AT.

It is to be noted that in a case where space in which the grip member 31 can be received is sufficiently ensured on the inner sides of the plurality of guide rollers 41 by performing of the retracting step (fourth step ST4), the relatively rotating step (fifth step ST5) may be omitted.

As illustrated in FIG. 25, in the sixth step ST6, the first chuck 3including the grip member 31, which holds the workpiece W, is further moved in the first direction *DR1* (see an arrow AR1). The sixth step ST6 is a second moving step.

The second moving step (sixth step ST6) includes further moving the first chuck 3 in the first direction *DR1* so that the end face 31e of the grip member 31 moves between the plurality of guide rollers 41 and approaches the laser head 20. It is to be noted that the plurality of guide rollers 41 are retracted beforehand by performing of the above-described retracting processing, and thus the end face 31e of the grip member 31 does not collide with the plurality of guide rollers 41. By performing the second moving step, the position of the end face 31e of the grip member 31 of the first chuck 3 is changed to the first position P1 on the first direction *DR1* side relative to the plurality of guide rollers 41 from the second position P2 on the second direction *DR2* side relative to the plurality of guide rollers 41 (see FIG. 26).

In the example illustrated in FIG. 26, the second moving step (sixth step ST6) includes inserting the grip member 31 of the first chuck 3 on the inner sides of the plurality of guide rollers 41 of the second chuck 4 (hereinafter, referred to as an "inserting step"). It is to be noted that in a case where the inserting step is performed after the above-described relatively rotating step is performed, performing of the inserting step causes the plurality of grippers 32 of the grip member 31 to be respectively arranged in the plurality of corner portions C of the rectangular inner region SP1, which is defined by the plurality of guide rollers 41.

In a seventh step ST7, the workpiece W is further machined by irradiating the workpiece W with a laser beam from the laser head 20. The seventh step ST7 is a second machining step.

As illustrated in FIG. 26, in the second machining step (seventh step ST7), in a state in which the end face 31e of the grip member 31 is located on the first direction *DR1* side relative to the plurality of guide rollers 41, the workpiece W (more specifically, the short workpiece WS) is irradiated with the laser beam LA from the laser head 20.

In the example illustrated in FIG. 26, the end face 31e of the grip member 31 is located on the first direction *DR1* side relative to the plurality of guide rollers 41, and thus the length of the remaining workpiece produced by machining the workpiece W can be shortened.

In an eighth step ST8, the workpiece W is moved in either the first direction *DR1* or the second direction *DR2.* The eighth step ST8 is a third moving step. The third moving step (eighth step ST8) is performed by moving the first chuck 3, which holds the workpiece W, in either the first direction *DR1* or the second direction *DR2.* In this manner, the laser-beam irradiated position of the workpiece W in the direction along the first direction *DR1* is changed.

The second machining step (more specifically, irradiating the workpiece W with the laser beam LA from the laser head 20) and the third moving step (more specifically, moving the workpiece W in either the first direction *DR1* or the second direction DR2) may be performed simultaneously, sequentially, or alternately.

In a ninth step ST9, the grip member 31, which holds the workpiece W (more specifically, the short workpiece WS), is rotated about the first axis AT. The ninth step ST9 is a second rotating step.

As illustrated in FIG. 27, the second rotating step (ninth step ST9) is performed in the state in which the grip member 31 is inserted on the inner sides of the plurality of guide rollers 41. In the second rotating step (ninth step ST9), the grip member 31 and the plurality of guide rollers 41 are preferably rotated about the first axis AT synchronously.

In the example illustrated in FIG. 27, the second machining step and the second rotating step are performed simultaneously (in other words, the grip member 31, which is provided on the inner sides of the plurality of guide rollers 41, is rotated about the first axis AT, and the workpiece W, which is held by the grip member 31, is irradiated with a laser beam), and thus the workpiece W is separated into the machined product Wt and the remaining workpiece Wr.

As illustrated in FIG. 18, in a tenth step ST10, the remaining workpiece Wr, which has been produced by the laser-beam machining of the workpiece W, is unloaded. The tenth step ST10 is a remaining workpiece unloading step.

The remaining workpiece unloading step (a tenth step ST10) is automatically performed by the grip member 31 releasing the remaining workpiece Wr (in other words, holding of the remaining workpiece Wr by the grip member 31 is released), in a state in which the end face 31e of the grip member 31 of the first chuck 3 is located on the first direction *DR1* side relative to the plurality of guide rollers 41. More specifically, holding of the remaining workpiece Wr by the grip member 31 is released, and thus the remaining workpiece Wr is dropped downward from the grip member 31.

In the example illustrated in FIG. 18, the remaining workpiece Wr is released, in the state in which the end face 31e of the grip member 31 is located on the first direction *DR1* side relative to the plurality of guide rollers 41, and thus the remaining workpiece Wr is unloaded with certainty to the first direction *DR1* side relative to the plurality of guide rollers 41. In addition, the remaining workpiece Wr is automatically unloaded by the grip member 31 releasing holding of the remaining workpiece Wr, and thus a pusher for pushing out the remaining workpiece Wr from the grip member 31 to the first direction *DR1* side can be omitted. By omitting the pusher and the operation of the pusher, the time needed for unloading the remaining workpiece Wr can be shortened.

The present invention will not be limited to the above-described and/or modifications; it will be appreciated that the embodiments may be modified or changed within the scope of the present invention as defined by the appended claims.

### Reference Signs List

1, 1A, 1B ... Laser-beam working machine, 2 ... Laser-beam irradiation apparatus, 3 ... First chuck, 4 ... Second chuck, 6 ... Mover, 8 ... Controller, 20 ... Laser head, 22 ... Laser head mover, 22a ... Vertical drive, 22b ... Horizontal drive, 24 ... Third base, 31 ... Grip member, 31a ... First grip member, 31b ... Second grip member, 31c ... Third grip member, 31d ... Fourth grip member, 31e ... End face, 32 ... Gripper, 32a ... First gripper, 32b ... Second gripper, 32c ... Third gripper, 32d ... Fourth gripper, 33 ... Gripper support body, 33a ... First gripper support body, 33b ... Second gripper support body, 33c ... Third gripper support body, 33d ... Fourth gripper support body, 34 ... Gripper mover, 34a ... First gripper mover, 34b ... Second gripper mover, 34c ... Third gripper mover, 34d ... Fourth gripper mover, 35 ... First rotor, 36 ... First rotation drive, 37 ... Rotor support member, 38 ... First chuck base, 41a ... First guide roller, 41b ... Second guide roller, 41c ... Third guide roller, 41d ... Fourth guide roller, 42 ... Roller support member, 42a ... First roller support member, 42b ... Second roller support member, 42c ... Third roller support member, 42d ... Fourth roller support member, 43 ... Roller mover, 43a ... First roller mover, 43b ... Second roller mover, 43c ... Third roller mover, 43d ... Fourth roller mover, 45 ... Second rotor, 45h ... Through hole, 46 ... Second rotation drive, 47 ... Power transmission member, 48 ... Second rotor support member, 48h ... Through hole, 61 ... Drive, 62 ... Guide member, 63 ... Power transmission member, 71 ... Loader, 72 ... First support member, 73 ... Support member mover, 75 ... Unloader, 76 ... Second support member, 77 ... Remaining workpiece collector, 78 ... Carriage, 79 ... Remaining workpiece container, 80 ... Processor, 82 ... Memory, 84 ... Communication circuit, 86 ... Input device, 88 ... Bus, 91 ... First base, 92 ... Second base, 320n ... Inner side surface, 320u ... Outer side surface, 822 ... Machining program, 862 ... Display with touch panel, C ... Corner portion, C1 ... First corner portion, C2 ... Second corner portion, C3 ... Third corner portion, C4 ... Fourth corner portion, MR ... Workpiece machining region, S1 ... First control signal, S2 ... Second control signal, S3 ... Third control signal, S4 ... Fourth control signal, S5 ... Fifth control signal, S6 ... Sixth control signal, S7 ... Seventh control signal, SP ... Inner region, SP1 ... Rectangular inner region, W ... Workpiece, W2 ... First part of workpiece, W2 ... Second part of workpiece, W3 ... Third part of workpiece, WL ... Long workpiece, WS ... Short workpiece, Wa ... Tip end portion of workpiece, WB ... Base end portion of workpiece, Wp ... Pipe, Wr ... Remaining workpiece, Wt ... Machined product

## Claims

1. A laser-beam working machine (1, 1A, 1B) comprising:
a laser head (20) configured to irradiate a workpiece (W) extending in a first direction (DR1) with a laser beam (LA) to machine the workpiece (W);
a first chuck (3) including a grip member (31) configured to hold the workpiece (W), the first chuck (3) being movable in the first direction (DR1);
a second chuck (4) provided between the laser head (20) and the first chuck (3) in a direction along the first direction (DR1), the second chuck (4) including a plurality of guide rollers (41) configured to interpose the workpiece (W) and guide a movement of the workpiece (W) in the first direction (DR1); and
a mover (6) configured to move the first chuck (3) in the first direction (DR1),
**characterized in that**
the mover (6) is configured to allow an end face (31e) of the grip member (31) to pass through the plurality of guide rollers (41) and approach the laser head (20) such that the end face (31e) of the grip member (31) moves from a second position (P2), which is on a side of a second direction (DR2) that is opposite the first direction (DR1) relative to the plurality of guide rollers (41), to a first position (P1), which is on a side of the first direction (DR1) relative to the plurality of guide rollers (41).

2. The laser-beam working machine (1, 1A, 1B) according to claim 1, wherein in a state in which the grip member (31) is inserted in inner sides of the plurality of guide rollers (41), the grip member (31) is capable of releasing holding of the workpiece (W).

3. The laser-beam working machine (1, 1A, 1B) according to claim 1 or 2, wherein each of the plurality of guide rollers (41) is rotatable about a rotation axis (AX) perpendicular to the first direction (DR1).

4. The laser-beam working machine (1, 1A, 1B) according to one of claims 1 to 3, wherein
the plurality of guide rollers (41) comprises:
a first guide roller (41a) configured to be in contact with the workpiece (W); and
a second guide roller (41b) provided on a side opposite to the first guide roller (41a) with respect to the workpiece (W), the second guide roller (41b) being configured to be in contact with the workpiece (W).

5. The laser-beam working machine (1, 1A, 1B) according to one of claims 1 to 4, further comprising a roller mover (43) configured to move the plurality of guide rollers (41) in a direction not parallel to the first direction (DR1) between advanced positions (A1, A2) in contact with the workpiece (W) and retracted positions (B1, B2) allowing the end face (31e) of the grip member (31) to pass through the plurality of guide rollers (41).

6. The laser-beam working machine (1, 1A, 1B) according to one of claims 1 to 5, wherein the first chuck (3) comprises a first rotation drive (36) configured to rotate the grip member (31) about a first axis (AT) parallel to the first direction (DR1).

7. The laser-beam working machine (1, 1A, 1B) according to claim 6, wherein the second chuck (4) comprises a second rotation drive (46) configured to rotate the plurality of guide rollers (41) about the first axis (AT).

8. The laser-beam working machine (1, 1A, 1B) according to claim 7,
wherein a rectangular inner region (SP1) is defined by the plurality of guide rollers (41), when viewed in a direction along the second direction (DR2) opposite to the first direction (DR1),
wherein the grip member (31) comprises a plurality of grippers (32), and
wherein the plurality of grippers (32) are respectively arrangeable in a plurality of corner portions (C) of the rectangular inner region (SP1).

9. The laser-beam working machine (1, 1A, 1B) according to claim 8,
further comprising a controller (8),
wherein the controller (8) is configured to control the mover (6), the first rotation drive (36), and the second rotation drive (46) such that it is capable of performing a first moving mode for moving the first chuck (3) in either the first direction (DR1) or the second direction (DR2), in a state in which rotation phases of the plurality of grippers (32) about the first axis (AT) are respectively coincident with rotation phases of the plurality of guide rollers (41) about the first axis (AT), and
wherein the controller (8) is configured to control the mover (6), the first rotation drive (36), and the second rotation drive (46) such that it is capable of performing a second moving mode for moving the first chuck (3) in either the first direction (DR1) or the second direction (DR2), in a state in which the rotation phases of the plurality of grippers (32) about the first axis (AT) are respectively shifted from the rotation phases of the plurality of guide rollers (41) about the first axis (AT) by 45 degrees.

10. The laser-beam working machine (1, 1A, 1B) according to claim 7 or 8,
further comprising a controller (8),
wherein the controller (8) is configured to control the mover (6) such that it is capable of changing a state of the grip member (31) from a first state in which entirety of the grip member (31) is arranged outside the second chuck (4) to a second state in which the grip member (31) is inserted in the inner sides of the plurality of guide rollers (41),
wherein the controller (8) is configured to control the first rotation drive (36) and the second rotation drive (46) such that it is capable of performing a first rotating mode for synchronously rotating the grip member (31) in the first state and the plurality of guide rollers (41) about the first axis (AT), and
wherein the controller (8) is configured to control the first rotation drive (36) and the second rotation drive (46) such that it is capable of performing a second rotating mode for rotating the grip member (31) in the second state about the first axis (AT).

11. The laser-beam working machine (1, 1A, 1B) according to claim 10,
wherein the controller (8) is configured to control the laser head (20) such that it is capable of performing a long workpiece machining mode for irradiating the laser beam (LA) from the laser head (20) toward a long workpiece (WL) supported by the grip member (31) in the first state and the plurality of guide rollers (41), and
wherein the controller (8) is configured to control the laser head (20) such that it is capable of performing a short workpiece machining mode for irradiating the laser beam (LA) from the laser head (20) toward a short workpiece (WS) held by the grip member (31) in the second state.

12. A laser-beam machining method comprising:
a step of machining a workpiece (W), by irradiating the workpiece (W) with a laser beam (LA) from a laser head (20), in a state in which a first part (W1) of the workpiece (W) is held by a grip member (31) of a first chuck (6) and a second part (W2) of the workpiece (W) is interposed between a plurality of guide rollers (41) of a second chuck (4) located in a first direction (DR1) relative to the first chuck (3);
a step of moving the first chuck (3) in the first direction (DR1) toward the laser head (20) to move the workpiece (W) relatively to the laser head (20) and the plurality of guide rollers (41);
a step of further moving the first chuck (3) in the first direction (DR1) allowing an end face (31e) of the grip member (31) to pass through the plurality of guide rollers (41) and approach the laser head (20) such that the end face (31e) of the grip member (31) moves from a second position (P2), which is on a side of a second direction (DR2) that is opposite the first direction (DR1) relative to the plurality of guide rollers (41), to a first position (P1), which is on a side of the first direction (DR1) relative to the plurality of guide rollers (41); and
a step of further machining the workpiece (W), by irradiating the workpiece (W) with the laser beam (LA) from the laser head (20), in a state in which the end face (31e) of the grip member (31) is located on the first direction side relative to the plurality of guide rollers (41).

13. The laser-beam machining method according to claim 12, further comprising a step of unloading a remaining workpiece (Wr) produced by laser-beam machining of the workpiece (W),
wherein the step of unloading the remaining workpiece (Wr) is automatically performed by releasing the remaining workpiece (Wr) held by the grip member (31), in a state in which the end face (31e) of the grip member (31) is located on the first direction side relative to the plurality of guide rollers (41).

## Patentansprüche

1. Laserstrahlbearbeitungsmaschine (1, 1A, 1B), die Folgendes aufweist:
einen Laserkopf (20), der gestaltet ist, um ein sich in einer ersten Richtung (DR1) erstreckendes Werkstück (W) mit einem Laserstrahl (LA) zu bestrahlen, um das Werkstück (W) zu bearbeiten;
ein erstes Spannfutter (3), das ein Greifbauteil (31) aufweist, das gestaltet ist, um das Werkstück (W) zu halten, wobei das erste Spannfutter (3) in der ersten Richtung (DR1) bewegbar ist;
ein zweites Spannfutter (4), das zwischen dem Laserkopf (20) und dem ersten Spannfutter (3) in einer Richtung entlang der ersten Richtung (DR1) vorgesehen ist, wobei das zweite Spannfutter (4) eine Vielzahl von Führungsrollen (41) aufweist, die gestaltet sind, um das Werkstück (W) zwischen sich anzuordnen und eine Bewegung des Werkstücks (W) in der ersten Richtung (DR1) zu führen; und
eine Bewegungseinrichtung (6), die gestaltet ist, um das erste Spannfutter (3) in der ersten Richtung (DR1) zu bewegen,
**dadurch gekennzeichnet, dass**
die Bewegungseinrichtung (6) gestaltet ist, um zu ermöglichen, dass eine Endfläche (31e) des Greifbauteils (31) durch die Vielzahl von Führungsrollen (41) hindurchtritt und sich dem Laserkopf (20) derart annähert, dass sich die Endfläche (31e) des Greifbauteils (31) von einer zweiten Position (P2), die sich auf einer Seite einer zweiten Richtung (DR2), die zu der ersten Richtung (DR1) entgegengesetzt ist, relativ zu der Vielzahl von Führungsrollen (41) befindet, zu einer ersten Position (P1) bewegt, die sich auf einer Seite der ersten Richtung (DR1) relativ zu der Vielzahl von Führungsrollen (41) befindet.

2. Laserstrahlbearbeitungsmaschine (1, 1A, 1B) nach Anspruch 1, wobei in einem Zustand, in dem das Greifbauteil (31) in Innenseiten der Vielzahl von Führungsrollen (41) eingesetzt ist, das Greifbauteil (31) in der Lage ist, ein Halten des Werkstücks (W) freizugeben.

3. Laserstrahlbearbeitungsmaschine (1, 1A, 1B) nach Anspruch 1 oder 2, wobei jede der Vielzahl von Führungsrollen (41) um eine zu der ersten Richtung (DR1) senkrechten Drehachse (AX) drehbar ist.

4. Laserstrahlbearbeitungsmaschine (1, 1A, 1B) nach einem der Ansprüche 1 bis 3, wobei
die Vielzahl von Führungsrollen (41) Folgendes aufweist:
eine erste Führungsrolle (41a), die gestaltet ist, um mit dem Werkstück (W) in Kontakt zu stehen; und
eine zweite Führungsrolle (41b), die auf einer zu der ersten Führungsrolle (41a) in Bezug auf das Werkstück (W) entgegengesetzten Seite vorgesehen ist, wobei die zweite Führungsrolle (41b) gestaltet ist, um mit dem Werkstück (W) in Kontakt zu stehen.

5. Laserstrahlbearbeitungsmaschine (1, 1A, 1B) nach einem der Ansprüche 1 bis 4, die des Weiteren eine Rollenbewegungseinrichtung (43) aufweist, die gestaltet ist, um die Vielzahl von Führungsrollen (41) in einer Richtung, die nicht parallel zu der ersten Richtung (DR1) verläuft, zwischen vorgerückten Positionen (A1, A2) in Kontakt mit dem Werkstück (W) und eingezogenen Positionen (B1, B2) zu bewegen, die ermöglichen, dass die Endfläche (31e) des Greifbauteils (31) durch die Vielzahl von Führungsrollen (41) hindurchtreten kann.

6. Laserstrahlbearbeitungsmaschine (1, 1A, 1B) nach einem der Ansprüche 1 bis 5, wobei das erste Spannfutter (3) einen ersten Drehantrieb (36) aufweist, der gestaltet ist, um das Greifbauteil (31) um eine erste Achse (AT), die parallel zu der ersten Richtung (DR1) verläuft, zu drehen.

7. Laserstrahlbearbeitungsmaschine (1, 1A, 1B) nach Anspruch 6, wobei das zweite Spannfutter (4) einen zweiten Drehantrieb (46) aufweist, der gestaltet ist, um die Vielzahl von Führungsrollen (41) um die erste Achse (AT) zu drehen.

8. Laserstrahlbearbeitungsmaschine (1, 1A, 1B) nach Anspruch 7,
wobei ein viereckiger Innenbereich (SP1) durch die Vielzahl von Führungsrollen (41) aus Sicht in einer Richtung entlang der zweiten Richtung (DR2) entgegengesetzt zu der ersten Richtung (DR1) definiert ist,
wobei das Greifbauteil (31) eine Vielzahl von Greifern (32) aufweist, und
wobei die Vielzahl von Greifern (32) entsprechend in einer Vielzahl von Eckabschnitten (C) des viereckigen Innenbereichs (SP1) angeordnet werden kann.

9. Laserstrahlbearbeitungsmaschine (1, 1A, 1B) nach Anspruch 8,
die des Weiteren ein Steuerungsgerät (8) aufweist,
wobei das Steuerungsgerät (8) gestaltet ist, um die Bewegungseinrichtung (6), den ersten Drehantrieb (36) und den zweiten Drehantrieb (46) derart zu steuern, dass es in der Lage ist, einen ersten Bewegungsmodus zum Bewegen des ersten Spannfutters auszuführen (3) entweder in der ersten Richtung (DR1) oder in der zweiten Richtung (DR2) auszuführen, in einem Zustand, in dem Drehphasen der Vielzahl der Greifer (32) um die erste Achse (AT) entsprechend mit Drehphasen der Vielzahl der Führungsrollen (41) um die erste Achse (AT) übereinstimmen, und
wobei das Steuerungsgerät (8) gestaltet ist, um die Bewegungseinrichtung (6), den ersten Drehantrieb (36) und den zweiten Drehantrieb (46) derart zu steuern, dass es in der Lage ist, einen zweiten Bewegungsmodus zum Bewegen des ersten Spannfutters (3) entweder in der ersten Richtung (DR1) oder in der zweiten Richtung (DR2) auszuführen, in einem Zustand, in dem die Drehphasen der Vielzahl der Greifer (32) um die erste Achse (AT) entsprechend um 45 Grad gegenüber den Drehphasen der Vielzahl von Führungsrollen (41) um die erste Achse (AT) verschoben sind.

10. Laserstrahlbearbeitungsmaschine (1, 1A, 1B) nach Anspruch 7 oder 8,
die des Weiteren ein Steuerungsgerät (8) aufweist,
wobei das Steuerungsgerät (8) gestaltet ist, um die Bewegungseinrichtung (6) derart zu steuern, dass es in der Lage ist, einen Zustand des Greifbauteils (31) von einem ersten Zustand, in dem sich das gesamte Greifbauteil (31) außerhalb des zweiten Spannfutters (4) befindet, in einen zweiten Zustand zu ändern, in dem das Greifbauteil (31) in die Innenseiten der Vielzahl von Führungsrollen (41) eingesetzt ist,
wobei das Steuerungsgerät (8) gestaltet ist, um den ersten Drehantrieb (36) und den zweiten Drehantrieb (46) derart zu steuern, dass es in der Lage ist, einen ersten Drehmodus zum synchronen Drehen des Greifbauteils (31) in dem ersten Zustand und der Vielzahl von Führungsrollen (41) um die erste Achse (AT) auszuführen, und
wobei das Steuerungsgerät (8) gestaltet ist, um den ersten Drehantrieb (36) und den zweiten Drehantrieb (46) derart zu steuern, dass es in der Lage ist, einen zweiten Drehmodus zum Drehen des Greifbauteils (31) in dem zweiten Zustand um die erste Achse (AT) auszuführen.

11. Laserstrahlbearbeitungsmaschine (1, 1A, 1B) nach Anspruch 10,
wobei das Steuerungsgerät (8) gestaltet ist, um den Laserkopf (20) derart zu steuern, dass es in der Lage ist, einen Bearbeitungsmodus für lange Werkstücke zum Bestrahlen des Laserstrahls (LA) aus dem Laserkopf (20) in Richtung eines langen Werkstücks (WL) auszuführen, das durch das Greifbauteil (31) in dem ersten Zustand und die Vielzahl von Führungsrollen (41) gestützt wird, und
wobei das Steuerungsgerät (8) gestaltet ist, um den Laserkopf (20) derart zu steuern, dass es der Lage ist, einen Bearbeitungsmodus für kurze Werkstücke zum Bestrahlen des Laserstrahls (LA) aus dem Laserkopf (20) in Richtung eines kurzen Werkstücks (WS) auszuführen, das durch das Greifbauteil (31) in dem zweiten Zustand gehalten wird.

12. Laserstrahlbearbeitungsverfahren, das Folgendes aufweist:
einen Schritt zum Bearbeiten eines Werkstücks (W) durch Bestrahlen des Werkstücks (W) mit einem Laserstrahl (LA) aus einem Laserkopf (20) in einem Zustand, in dem ein erster Teil (W1) des Werkstücks (W) durch ein Greifbauteil (31) eines ersten Spannfutters (6) gehalten wird und ein zweiter Teil (W2) des Werkstücks (W) zwischen einer Vielzahl von Führungsrollen (41) eines zweiten Spannfutters (4) angeordnet ist, das in einer ersten Richtung (DR1) relativ zu dem ersten Spannfutter (3) angeordnet ist;
einen Schritt zum Bewegen des ersten Spannfutters (3) in der ersten Richtung (DR1) in Richtung des Laserkopfes (20), um das Werkstück (W) relativ zu dem Laserkopf (20) und der Vielzahl von Führungsrollen (41) zu bewegen;
einen Schritt zum Weiterbewegen des ersten Spannfutters (3) in der ersten Richtung (DR1), um zu ermöglichen, dass eine Endfläche (31e) des Greifbauteils (31) durch die Vielzahl von Führungsrollen (41) hindurchtritt und sich dem Laserkopf (20) derart annähert, dass sich die Endfläche (31e) des Greifbauteils (31) von einer zweiten Position (P2), die sich auf einer Seite einer zweiten Richtung (DR2), die zu der ersten Richtung (DR1) entgegengesetzt ist, relativ zu der Vielzahl von Führungsrollen (41) befindet, zu einer ersten Position (P1) bewegt, die sich auf einer Seite der ersten Richtung (DR1) relativ zu der Vielzahl von Führungsrollen (41) befindet; und
einen Schritt zum Weiterbearbeiten des Werkstücks (W) durch Bestrahlen des Werkstücks (W) mit dem Laserstrahl (LA) aus dem Laserkopf (20) in einem Zustand, in dem die Endfläche (31e) des Greifbauteils (31) auf der Seite der ersten Richtung relativ zu der Vielzahl von Führungsrollen (41) angeordnet ist.

13. Laserstrahlbearbeitungsverfahren nach Anspruch 12, das des Weiteren einen Schritt zum Entladen eines durch eine Laserstrahlbearbeitung des Werkstücks (W) hergestellten verbleibenden Werkstücks (Wr) aufweist,
wobei der Schritt zum Entladen des verbleibenden Werkstücks (Wr) automatisch ausgeführt wird, indem das durch das Greifbauteil (31) gehaltene verbleibende Werkstück (Wr) freigegeben wird, in einem Zustand, in dem die Endfläche (31e) des Greifbauteils (31) auf der Seite der ersten Richtung relativ zu der Vielzahl von Führungsrollen (41) angeordnet ist.

## Revendications

1. Outil d'usinage laser (1, 1A, 1B) comprenant :
une tête laser (20) configurée pour irradier une pièce (W) s'étendant dans une première direction (DR1) à l'aide d'un faisceau laser (LA) pour usiner la pièce (W) ;
un premier mandrin (3) comportant un élément de préhension (31) configuré pour maintenir la pièce (W), le premier mandrin (3) étant mobile dans la première direction (DR1) ;
un second mandrin (4) disposé entre la tête laser (20) et le premier mandrin (3) dans une direction le long de la première direction (DR1), le second mandrin (4) comprenant une pluralité de rouleaux de guidage (41) configurés pour interposer la pièce (W) et guider un mouvement de la pièce (W) dans la première direction (DR1) ; et
un dispositif mobile (6) configuré pour déplacer le premier mandrin (3) selon la première direction (DR1),
**caractérisé en ce que**
le dispositif mobile (6) est configuré pour permettre
à une face d'extrémité (31e) de l'élément de préhension (31) de passer à travers la pluralité de rouleaux de guidage (41) et se rapprocher de la tête laser (20) de sorte que la face d'extrémité (31e) de l'élément de préhension (31) se déplace d'une seconde position (P2), qui est d'un côté d'une seconde direction (DR2) qui est opposée à la première direction (DR1) par rapport à la pluralité de rouleaux de guidage (41), à une première position (P1), qui est sur un côté de la première direction (DR1) par rapport à la pluralité de rouleaux de guidage (41).

2. Outil d'usinage laser (1, 1A, 1B) selon la revendication 1, dans un état dans lequel l'élément de préhension (31) est inséré dans des côtés intérieurs de la pluralité de rouleaux de guidage (41), l'élément de préhension (31) étant apte à libérer le maintien de la pièce (W).

3. Outil d'usinage laser (1, 1A, 1B) selon la revendication 1 ou 2, chacun de la pluralité de rouleaux de guidage (41) pouvant tourner autour d'un axe de rotation (AX) perpendiculaire à la première direction (DR1).

4. Outil d'usinage laser (1, 1A, 1B) selon l'une des revendications 1 à 3,
la pluralité de rouleaux de guidage (41) comprenant :
un premier rouleau de guidage (41a) configuré pour être en contact avec la pièce (W) ; et
un second rouleau de guidage (41b) disposé sur un côté opposé au premier rouleau de guidage (41a) par rapport à la pièce (W), le second rouleau de guidage (41b) étant configuré pour être en contact avec la pièce (W).

5. Outil d'usinage laser (1, 1A, 1B) selon l'une des revendications 1 à 4, comprenant en outre un dispositif mobile à rouleaux (43) configuré pour déplacer la pluralité de rouleaux de guidage (41) dans une direction non parallèle à la première direction (DR1) entre des positions avancées (A1, A2) en contact avec la pièce (W) et des positions rétractées (B1, B2) permettant à la face d'extrémité (31e) de l'élément de préhension (31) de passer à travers la pluralité de rouleaux de guidage (41).

6. Outil d'usinage laser (1, 1A, 1B) selon l'une des revendications 1 à 5, le premier mandrin (3) comprenant un premier entraînement en rotation (36) configuré pour faire tourner l'élément de préhension (31) autour d'un premier axe (AT) parallèle à la première direction (DR1).

7. Outil d'usinage laser (1, 1A, 1B) selon la revendication 6, le second mandrin (4) comprenant un second entraînement en rotation (46) configuré pour faire tourner la pluralité de rouleaux de guidage (41) autour du premier axe (AT).

8. Outil d'usinage laser (1, 1A, 1B) selon la revendication 7,
une région intérieure rectangulaire (SP1) étant définie par la pluralité de rouleaux de guidage (41), vue dans une direction le long de la deuxième direction (DR2) opposée à la première direction (DR1),
l'élément de préhension (31) comprenant une pluralité de pinces (32), et
la pluralité de pinces (32) pouvant être disposées respectivement dans une pluralité de parties de coin (C) de la région intérieure rectangulaire (SP1).

9. Outil d'usinage laser (1, 1A, 1B) selon la revendication 8,
comprenant en outre un dispositif de commande (8),
le dispositif de commande (8) étant configuré pour commander le dispositif mobile (6), le premier entraînement en rotation (36), et le second entraînement en rotation (46) de telle sorte qu'il est apte à réaliser un premier mode mobile pour déplacer le premier mandrin (3) soit dans la première direction (DR1) soit dans la seconde direction (DR2), dans un état dans lequel des phases de rotation de la pluralité de pinces (32) autour du premier axe (AT) coïncident respectivement avec des phases de rotation de la pluralité de rouleaux de guidage (41) autour du premier axe (AT), et
le dispositif de commande (8) étant configuré pour commander le dispositif mobile (6), le premier entraînement en rotation (36), et le second entraînement en rotation (46) de telle sorte qu'il est apte à réaliser un second mode de déplacement du premier mandrin (3) soit dans la première direction (DR1) soit dans la seconde direction (DR2), dans un état dans lequel les phases de rotation de la pluralité de pinces (32) autour du premier axe (AT) sont respectivement décalées des phases de rotation de la pluralité de rouleaux de guidage (41) autour du premier axe (AT) de 45 degrés.

10. Outil d'usinage laser (1, 1A, 1B) selon la revendication 7 ou 8,
comprenant en outre un dispositif de commande (8),
le dispositif de commande (8) étant configuré pour commander le dispositif mobile (6) de sorte qu'il est apte à changer un état de l'élément de préhension (31) d'un premier état dans lequel la totalité de l'élément de préhension (31) est agencé à l'extérieur du second mandrin (4) vers un second état dans lequel l'élément de préhension (31) est inséré dans des côtés intérieurs de la pluralité de rouleaux de guidage (41),
le dispositif de commande (8) étant configuré pour commander le premier entraînement en rotation (36) et le deuxième entraînement en rotation (46) de sorte qu'il est apte à réaliser un premier mode de rotation pour mettre en rotation de manière synchrone l'élément de préhension (31) dans le premier état et la pluralité de rouleaux de guidage (41) autour du premier axe (AT), et
le dispositif de commande (8) étant configuré pour commander le premier entraînement en rotation (36) et le deuxième entraînement en rotation (46) de sorte qu'il est apte à réaliser un deuxième mode de rotation pour faire tourner l'élément de préhension (31) dans le deuxième état autour du premier axe (AT).

11. Outil d'usinage laser (1, 1A, 1B) selon la revendication 10,
le dispositif de commande (8) étant configuré pour commander la tête laser (20) de sorte qu'elle est apte à réaliser un mode d'usinage de pièce longue pour irradier le faisceau laser (LA) depuis la tête laser (20) vers une pièce longue (WL) maintenue par l'élément de préhension (31) dans le premier état et la pluralité de rouleaux de guidage (41), et
le dispositif de commande (8) étant configuré pour commander la tête laser (20) de sorte qu'elle est apte à réaliser un mode d'usinage de pièce courte pour irradier le faisceau laser (LA) de la tête laser (20) vers une pièce courte (WS) maintenue par l'élément de préhension (31) dans le second état.

12. Procédé d'usinage par faisceau laser comprenant :
une étape d'usinage d'une pièce (W), par irradiation de la pièce (W) par un faisceau laser (LA) issu d'une tête laser (20), dans un état dans lequel une première partie (W1) de la pièce (W) est maintenue par un élément de préhension (31) d'un premier mandrin (6) et une seconde partie (W2) de la pièce (W) est interposée entre une pluralité de rouleaux de guidage (41) d'un second mandrin (4) situé dans une première direction (DR1) par rapport au premier mandrin (3) ;
une étape de déplacement du premier mandrin (3) dans la première direction (DR1) vers la tête laser (20) pour déplacer la pièce (W) par rapport à la tête laser (20) et la pluralité de rouleaux de guidage (41) ;
une étape consistant à déplacer encore le premier mandrin (3) dans la première direction (DR1) permettant à une face d'extrémité (31e) de l'élément de préhension (31) de passer à travers la pluralité de rouleaux de guidage (41) et de se rapprocher de la tête laser (20) de sorte que la face d'extrémité (31e) de l'élément de préhension (31) se déplace depuis une seconde position (P2), se trouvant d'un côté d'une deuxième direction (DR2) opposée à la première direction (DR1) par rapport à la pluralité de rouleaux de guidage (41), à une première position (P1), qui est d'un côté de la première direction (DR1) par rapport à la pluralité de rouleaux de guidage (41) ; et
une étape d'usinage supplémentaire de la pièce (W), par irradiation de la pièce (W) avec le faisceau laser (LA) depuis la tête laser (20), dans un état dans lequel la face d'extrémité (31e) de l'élément de préhension (31) est située sur le premier côté de la direction par rapport à la pluralité de rouleaux de guidage (41).

13. Procédé d'usinage par faisceau laser selon la revendication 12, comprenant en outre une étape de déchargement d'une pièce restante (Wr) produite par usinage par faisceau laser de la pièce (W),
l'étape de déchargement de la pièce restante (Wr) étant effectuée automatiquement en libérant la pièce restante (Wr) maintenue par l'élément de préhension (31), dans un état dans lequel la face d'extrémité (31e) de l'élément de préhension (31) est située du côté de la première direction par rapport à la pluralité de rouleaux de guidage (41).
